# EUROPEAN PATENT SPECIFICATION

(11) **EP 0 957 669 B1**
(45) Date of publication and mention of the grant of the patent: **18.06.2008**
(21) Application number: 96928915.6
(22) Date of filing: 16.08.1996
(51) Int. Cl.: A01D 34/64, B65D 21/02, A01D 43/14

(54) **APPARATUS AND METHOD FOR CUTTING AND TREATING VEGETATION**
VORRICHTUNG UND VERFAHREN ZUM MÄHEN UND BEHANDELN VON VEGETATION
APPAREIL ET PROCEDE PERMETTANT DE TONDRE ET DE TRAITER DE LA VEGETATION

(30) Priority: 17.08.1995 US 2397; 28.11.1995 US 7633; 12.12.1995 US 47770
(43) Date of publication of application: 24.11.1999
(73) Proprietor: Burch, Thomas B., Boone, NC 28607 (US)
(72) Inventor: Burch, Thomas B., Boone, NC 28607 (US)
(74) Representative: von Kreisler Selting Werner
(86) International application number: PCT/US1996/013362
(87) International publication number: WO 1997/006664

(56) References cited:
- US-A- 2 740 248
- US-A- 2 973 615
- US-A- 3 334 475
- US-A- 3 534 533
- US-A- 4 926 622
- US-A- 5 105 858
- US-A- 5 237 803
- US-A- 5 329 752

## Description

### FIELD OF THE INVENTION

The present invention relates to an apparatus and method for cutting and treating vegetation, and more particularly to an apparatus and method for cutting vegetation while simultaneously applying a treatment fluid to the remaining stems of the cut vegetation.

### 1. BACKGROUND OF THE INVENTION

Power companies periodically cut the vegetation that grows along powerline right-of-ways to maintain access to the powerlines and to minimize line losses. Access is required to facilitate service and repair of damaged powerlines. Excessive line losses may occur when high, dense vegetation beneath the powerline causes the electricity flowing through the powerline to bleed into the ground. The higher and more dense the vegetation, the greater the spurious radiation loss from the powerline. Similarly, highway departments periodically cut the vegetation that grows in medians and along roadsides to enhance the safety of motorists and pedestrians. Cutting the vegetation improves visibility and provides a shoulder along the road for emergency stops. As the demand for electrical power and highways increases, the number of right-of-way and roadside miles multiplies exponentially. Accordingly, power companies and highway departments continually seek more efficient and cost effective methods for cutting vegetation along right-of-ways and roadsides.

Power companies and highway departments have discovered that it is advantageous to treat the vegetation at the time it is cut with a treatment to control the growth of unwanted vegetation, or to reduce the rate of growth of desirable vegetation. The vegetation is typically treated with a granular or fluid treatment such as a growth regulator, herbicide, pesticide, fungicide, fertilizer or biological agent, depending on the desired result. The application of a treatment fluid to vegetation is most often accomplished by broadcasting the fluid through the air so that the treatment comes in contact with the vegetation, and is held in place by adhesion of the fluid to the individual plants. The most common methods of broadcasting treatment fluids include spraying the treatment in the area containing the vegetation from an aerial vehicle, from a ground vehicle fitted with a series of spray nozzles, from a hand-held sprayer or from a mower equipped with a treatment applicator. As yet, however, there has not been a mower equipped with a treatment applicator which is capable of cutting vegetation and treating the cut vegetation in a non-horizontal orientation, such as on a hillside using a mower head attached to the end of a hinged boom arm.

Unfortunately, these broadcasting methods do not permit accuracy or control in applying the treatment fluid to the plants. Broadcasting methods, and spraying in particular, allow the treatment to come into contact with desirable plants, and to be applied in areas other than the area to be treated. Once the treatment is broadcast into the air, the spray pattern becomes random and some plants may not be treated at all. Further, when the concentration of the treatment is high, the operator usually applies more treatment than is necessary, and thus substantial amounts of the treatment are wasted. Treatment fluids are typically applied until the foliage of the plant is visibly wet. Thus, there is no way of predicting how much of the treatment will fall onto the ground around the plant where it may contaminate the surrounding soil and the underground water system, and how much, if any, of the treatment will be absorbed into the vascular system, or translocation stream, of the plant where it will produce the desired result.

DowElanco, a manufacturer of herbicides, instructs users that its fluid chemistry is effective only if the treatment penetrates the foliage and is absorbed into the translocation stream of the plant. As a result, chemical companies produce chemicals known as "adjuvants" that enable treatment fluids that are broadcast by spraying to penetrate through dense foliage. Many treatment fluids also include a surfactant to promote absorption of the agent into the translocation stream of the plant. Nevertheless, usually only a small percentage of the volume of treatment fluid that is broadcast by spraying actually reaches the translocation stream of the plant. The remainder of the treatment fluid falls onto the ground where it may mix with precipitation and run onto surrounding land, or may vaporize into the atmosphere and be blown by the wind onto surrounding land.

Naturally, farmers and people living in close proximity to powerline right-of-ways and highways object to the application of treatment fluids which results in run-off or wind drift. Consequently, power companies and highway departments are often restricted by governmental regulations and local ordinances from broadcasting treatment fluids by spraying. Even though the power companies and highway departments regularly heed these regulations and ordinances, environmentalists complain that anytime a treatment fluid is applied by a broadcasting method there is necessarily some contamination of the ground and underground water system, as well as some risk of run-off and wind-drift. Further, in the event that a chemical contamination of the ground or water in the vicinity of the treatment area occurs, the power companies and the highway departments cannot conclusively prove that the cutting and treating operation was not the source of the contamination.

### 2. DESCRIPTION OF THE PRIOR ART

Various apparatus exist for cutting and treating vegetation with a treatment fluid. For example, US Patent Nos. 2,908,444 and 2,939,636 issued October 13, 1959, and June 7, 1960, respectively to Mullin; US Patent No. 2,973,615 issued March 7, 1961, to Yaremchuk; and US Patent No. 3,332,221 issued July 25, 1967, to McCain each disclose a rotary lawnmower equipped with a fluid chemical sprayer. US Patent No. 5,237,803 issued August 24, 1993, to Domingue, Jr. discloses a "bushhog" or "batwing" cutting apparatus equipped with a fluid chemical sprayer. The sprayers are located above the blade and within the housing of the mower so that the spray of treatment fluid is confined to the area immediately beneath the housing as the mower moves over the ground. The treatment fluid is dispersed by the centrifugal force generated by the rotating blade, or is released above the blade of the mower, so that a portion of the fluid vaporizes as it impinges the housing and/or the rotating blade of the mower. Nevertheless, the treatment fluid may fall onto the ground around the plant, and the vaporized treatment may be carried by the wind onto surrounding land. In addition, none of these apparatus are capable of cutting vegetation and treating the cut vegetation in a non-horizontal orientation, such as from the end of a hinged boom arm.
US Patent No. 2,878,633 issued March 24, 1959, to Mullin and US Patent No. 3,090,187 issued May 21, 1963, to Livingston each disclose a rotary lawnmower equipped with means for distributing a treatment fluid to the rotating blade of the mower. The Mullin patent further discloses conduit means for delivering the treatment fluid to an axial bore formed in the rotating shaft of the mower which terminates at an orifice formed in the underside of the blade. The centrifugal force of the rotating blade, however, throws the treatment fluid out from the orifice in droplet form. The Livingston patent further discloses a longitudinal groove formed in the leading edge of the blade for delivering the treatment fluid to the underside of the tip of the blade. Accordingly, the treatment fluid is applied directly to the freshly cut stem of the plant. The distributing means of the Livingston mower, however, is open to the atmosphere. Thus, the treatment fluid may be spilled onto the surrounding ground, or vaporized and carried by the wind onto the surrounding land.

US Patent No. 4,926,622 issued May 22, 1990, to McKee discloses a rotary brush cutter and herbicide applicator. The cutter includes a plurality of cutting blades and the applicator includes means for delivering the herbicide adjacent the cutting blades so that the herbicide is applied to the brush as it is being cut by the rotating cutting blades. In one embodiment, the applicator further includes a closed conduit for transporting the treatment fluid from a container mounted on the housing of the rotary cutter to an outlet port adjacent the cutter blade. The conduit includes an elongate tube fixed to the external surface of the rotating blade so that the outlet port is in fluid communication with the axial shaft of the rotary cutter. The tube, however, may break or kink as the blade bends longitudinally, and is subject to being punctured or torn away if the blade strikes a relatively immovable rock or stump.

In the rotary brush cutter known from the above-evaluated US Patent No. 4,926,622, the delivery pipe that delivers the weed killer solution to the vegetation terminates just above the path of travel of the cutting blade. Because the weed killer solution falls downwardly from the delivery pipe onto the cutting blade, this solution will be finally sprayed all over the interior area of the mower.

It is an object underlying the present invention to provide an apparatus and a method for cutting vegetation and treating the cut vegetation with a treatment fluid in a more effective, environment-friendly manner. This object is achieved by an apparatus in accordance with claim 1 and by a method in accordance with claim 36.

It is another and more particular object of the invention to provide an apparatus and method for cutting and simultaneously treating the remaining stems of the cut vegetation which includes means for delivering a treatment fluid to the underside of a cutting blade so that a stream of treatment fluid is continuously available to the remaining stems of the vegetation.

It is another object of the invention is to provide an apparatus and method for cutting and simultaneously treating the remaining stems of the cut vegetation by introducing a treatment fluid to the translocation stream of the vegetation.

It is another object of the invention to provide an apparatus and method for cutting vegetation and simultaneously applying a treatment fluid to the remaining stems of the cut vegetation which is capable of being used in any orientation, and in particular in any inclination from horizontal including vertical.

It is another object of the invention to provide an apparatus and method for cutting and simultaneously treating vegetation which includes a removable, hermetically sealed fluid container means for containing the treatment fluid.

It is another and more particular object of the invention to provide a method and apparatus for cutting and treating vegetation with a treatment fluidwn1ch minimizes spillage, waste and spoilage of the treatment fluid.

It is another object of the invention to provide an apparatus and method for cutting vegetation and simultaneously applying an accurate amount of a treatment fluid to the remaining stems of the cut vegetation.

It is another and more particular object of the invention to provide an apparatus and method for cutting and simultaneously treating vegetation which includes a flow control means for accurately metering the amount of treatment fluid that is delivered to the cutting blade.

It is another and more particular object of the invention to provide an apparatus and method for cutting and simultaneously treating vegetation which includes a ground speed detection means for detecting the ground speed of the mower so that the desired amount of treatment fluid is applied to the remaining stems of the cut vegetation.

It is another object of the invention to provide an apparatus and method for recording the location and the volume of a treatment fluid that is applied to powerline right-of-ways and highway medians and roadsides.

### SUMMARY OF THE INVENTION

The invention is an apparatus and method for cutting vegetation and simultaneously treating the remaining stems of the cut vegetation with a treatment fluid such as a growth regulator, herbicide, pesticide, fungicide, fertilizer, adjuvant, surfactant or biological agent, which is preferably water-born. The treatment fluid is applied without broadcasting, such as by spraying, the treatment onto the surrounding ground or into the atmosphere. Instead, the treatment fluid is delivered from a hermetically sealed fluid container through a fluid conduit to the underside of the cutting blade in a continuous fluid stream. Accordingly, the treatment fluid is continuously available to the cut ends of the remaining stems at the time that the vegetation is cut so that at least about 75-95% of the treatment fluid is absorbed directly into the translocation stream of the plant in near zero time, thereby maximizing the efficacy of the treatment and vastly reducing the required amount of treatment fluid as well as amount of active ingredient.

The apparatus includes a mower, a cutting blade drive means for rotating a cutting and treating means including at least one cutting blade assembly rotatably mounted on a blade carrier, a fluid container means for containing the treatment fluid, a flow control means for metering the amount of treatment fluid delivered to the cutting and treating means, and fluid conduit means for delivering the treatment fluid from the fluid container means to the cutting and treating means.

The mower may be any maneuverable tool for cutting vegetation which is movable over the ground, or above the ground such as for trimming hedges, trees and orchards. For example, the mower may be a push lawnmower, a conventional power lawnmower, a riding lawnmower, an engine driven tractor, a bushog mower, a batwing mower, a harvester, a hydraulic feller buncher, a high speed saw head, a high speed shear head, a sickle bar, a multiple disk mower, a reel mower, a flail mower or a mower head attached to the end of a hinged boom arm. For purposes of illustration only, the mower described herein is a conventional bushhog mower which is attached to the rear of an agricultural tractor.

The mower preferably includes a generally planar mower deck having a central opening therethrough for receiving the cutting blade drive means therein, a pair of generally linear, opposed sides, a generally linear front wall and an arcuate rear wall. At least a portion of the rear wall may include a plurality of short lengths of debris chain for preventing debris, such as loose stones, from being expelled from the underside of the mower deck. The mower is provided with at least one wheel secured to the mower deck for facilitating movement over the ground and for supporting the cutting and treating means at the desired height above the ground. A plurality of upright stanchions are fixed to the top surface of the mower deck for retaining the fluid container means therebetween.

The cutting blade drive means is secured to the mower deck and includes an elongate drive shaft received within the central opening of the mower deck. The cutting blade drive means is preferably powered by the power takeoff from the tractor which pulls the mower. However, the cutting blade drive means may be powered by a gasoline engine, or a hydraulic motor mounted to the topside of the mower deck. In a preferred embodiment, a bevel gear is provided adjacent one end of the drive shaft for engaging the rotating shaft of the power take-off of the tractor. The cutting and treating means is secured to the other end of the drive shaft. Regardless, the cutting blade drive means rotates the drive shaft of the cutting blade drive means which in turn rotates the blade carrier and at least one cutting blade assembly of the cutting and treating means. The drive shaft of the cutting blade drive means has a fluid conduit formed therein defining a continuous fluid passageway so that the drive shaft of the cutting blade drive means is in fluid communication with the pumping means and the cutting and treating means.

The cutting and treating means is secured to the drive shaft of the cutting blade drive means adjacent the underside of the mower deck, and includes at least one cutting blade assembly rotatably mounted on a blade carrier. The blade carrier may be any shape for mounting the at least one cutting blade assembly thereon. In a preferred embodiment, the blade carrier is an elongate bar having a central opening for receiving the cutting blade drive means therein, and at least one opening adjacent an end of the bar for receiving a cutting blade assembly therein. A lengthwise fluid conduit is provided between the central opening and the opening adjacent the end of the bar. The fluid conduit defines a continuous fluid passageway so that the drive shaft of the cutting blade drive means is in fluid communication with the cutting blade assembly. In another preferred embodiment, the blade carrier is a generally planar disk having a plurality, and preferably four orthogonally spaced, cutting blade assemblies mounted thereon.

At least one cutting blade assembly is rotatably mounted adjacent an end of the blade carrier. Preferably, a cutting blade assembly is mounted adjacent each of the opposed ends of the blade carrier. The cutting blade assembly includes a cutting blade shaft and a cutting blade hub secured on the cutting blade shaft. The cutting blade hub includes a cutting blade disposed outwardly therefrom. Preferably, the underside of the hub is saucer-shaped so that if the hub strikes an obstacle on the ground in the path of the cutting blade, the hub will travel over the obstacle without transferring a shock to the cutting blade. The leading edge of the cutting blade is beveled to provide a sharp cutting edge. The cutting blade assembly has a fluid conduit formed therein defining a continuous fluid passageway so that the fluid conduit provided in the blade carrier is in fluid communication with the underside of the cutting blade.

The fluid container means is secured between the upright stanchions provided on the topside of the mower deck. The fluid container means includes at least one substantially hollow, hermetically sealed fluid container cell containing the fluid treatment. In a preferred embodiment, the fluid container means includes a plurality of stacked, interlocking, removable, interconnected fluid container cells. Each of the cells is made of a material which is substantially resistant to ultraviolet light, such as polyurethane, polyethylene or polyvinylchloride (PVC) plastic.

An inlet port and an outlet port is provided on each cell and fitted with the female portion of a double end shutoff fitting. The male portion of the fitting engages the female portion of the fitting to permit treatment fluid to flow from an upper cell to a lower cell, and from the lowermost cell to a bulkhead fitting adjacent the pumping means. A flexible fluid conduit connects the outlet port of each upper cell to the inlet port of the next lowest cell. The flexible fluid conduit from the outlet port of the bottommost cell passes through the pumping means and is connected to a fitting provided on the housing of the cutting blade drive means. Accordingly, the fluid container means is in fluid communication with the cutting blade drive means. The male portion of the fitting which engages the female portion of the fitting in the inlet port of the uppermost cell is connected to an in-line filter and breather cap for venting the fluid container cells to the ambient atmosphere. The filter prevents debris, insects, etc. from entering the system without restricting the entry of ambient air.

The cells are stacked so that the bottommost cell is automatically filled with the treatment fluid from the upper cells as the treatment fluid is applied to the vegetation. Any number of cells may be filled at a remote location so that the treatment fluid is not spilled at the worksite where it may contact workers, contaminate the surrounding soil or the underground water supply. The cells are hermetically sealed so that the treatment fluid will not spoil or lose potency. A predetermined number of pre-filled cells may be stacked so that the user need not interrupt the cutting and treating operation to refill cells or to replace empty cells.

### BRIEF DESCRIPTION OF THE DRAWINGS

While some of the objects and advantages of the invention have been stated, others will become apparent as preferred embodiments of the invention are described in connection with the accompanying drawings in which:
FIG. 1a illustrates an embodiment of a power lawnmower;
FIG. 1b illustrates an embodiment of a bushog mower;
FIG. 2 is a schematic flow diagram illustrating the preferred components of an apparatus for cutting and treating vegetation;
FIG. 3 is an enlarged perspective view of the bushog mower of FIG. 1b;
FIG. 4a is a sectional view of the cutting blade drive means of the bushog mower of FIG. 1b;
FIG. 4b is an enlarged view of the cutting blade drive means of FIG. 4a;
FIG. 5a is an elevation view and partial sectional view of the cutting and treating means of the bushog mower of FIG. 1b;
FIG. 5b is a top view of the cutting and treating means of the bushog mower of FIG. 1b;
FIG. 5c is an enlarged view of the partial sectional view of FIG. 5a;
FIG. 5d is top view of the cutting blade hub taken along line 5d-5d of FIG. 5a;
FIG. 6a is an elevation view and partial sectional view of an alternative embodiment of the cutting and treating means of the bushog mower of FIG. 1b;
FIG. 6b is a top view of an alternative embodiment of the cutting and treating means of the bushog mower of FIG. 1b;
FIG. 6c is an elevation view and partial sectional view of an alternative embodiment of the cutting and treating means of the bushog mower of FIG. 1b;
FIG. 7 is a perspective view of the fluid container means of the bushog mower of FIG. 1b;
FIG. 8 is a perspective view of a FLO-THRU CELL^{®} of the fluid container means of the bushog mower of FIG. 1b;
FIG. 9 is a side view of the FLO-THRU CELL^{™} of FIG. 8;
FIG. 10 is an end view of the FLO-THRU CELL^{™} of FIG. 8;
FIG. 10a is a sectional view of the FLO-THRU CELL^{™} of FIG. 10 taken along line 10a-10a;
FIG. 11 is a perspective view showing the preferred components of the flow control means of the bushog mower of FIG. 1b;
FIG. 12 is an end view of the flange carrier of the flow control means of FIG. 11;
FIG. 13 is a sectional view of the flange carrier of the flow control means of FIG. 12 taken along line 13-13;
FIG. 14 is a front view of the controller of the flow control means of FIG. 12;
FIG. 15 is a schematic flow diagram illustrating the connection of the preferred components of the flow control means of FIG. 12;
FIG. 16 is a schematic diagram illustrating the preferred components of the power lawnmower of FIG. 1a;
FIG. 17a is a perspective view of the blade carrier of FIG. 16;
FIG. 17b is a perspective view of an alternative embodiment of the blade carrier of FIG. 16;
FIG. 18 is a top view of the center portion of the blade carrier of FIG. 17a;
FIG. 19 is a sectional view of an alternative embodiment of a portion of the cutting blade drive means and a portion of the cutting and treating means of a mower;
FIG. 20 is a sectional view of an alternative embodiment of a portion of the cutting blade drive means and a portion of the cutting and treating means of a mower;
FIG. 21 is a perspective view of a hydraulic feller buncher attached to the forward boom arm of a tractor;
FIG. 22 is a perspective view of a high speed saw head adapted for use on the hydraulic feller buncher of FIG. 21;
FIG. 23 is a perspective view of a high speed shear head adapted for use on the hydraulic teller buncher of FIG. 21;
FIG. 24 is a partial sectional view of a portion of the fluid conduit means of the apparatus for cutting and treating vegetation according to the invention illustrated in FIGS. 25-32.
FIG. 25 is a top view of a sickle bar according to the invention;
FIG. 26 is an end view of the sickle bar of FIG. 25;
FIG. 27 is a top view of a multiple disk mower according to the invention;
FIG. 28 is a side view of one of the disk of the multiple disk mower of FIG. 27;
FIG. 29 is a side view of a reel mower according to the invention;
FIG. 30 is an enlarged view of the stationary blade of the reel mower of FIG. 29 showing an alternative embodiment of the treatment fluid exit ports;
FIG. 31 is a side view of a flail mower according to the invention;
FIG. 32 is a top view of the flail mower of FIG. 31; and
FIG. 33 is a partial sectional view of an alternative embodiment of a portion of the fluid conduit means of the apparatus for cutting and treating vegetation according to the invention illustrated in FIGS. 25-32.

### DETAIL DESCRIPTION OF THE PREFERRED EMBODIMENTS

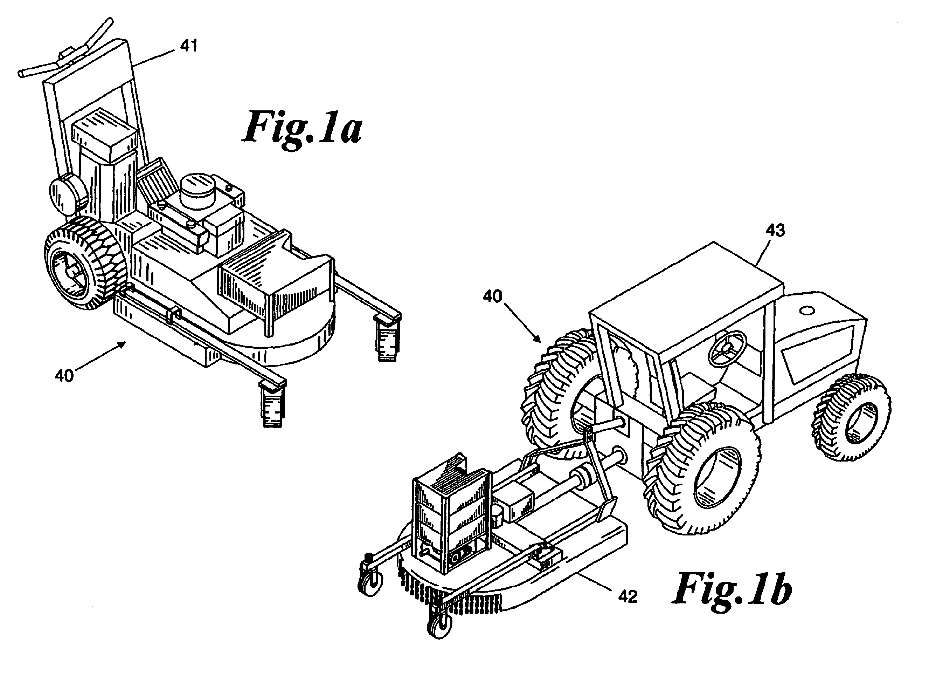

Referring to the accompanying drawings, FIGS. 1a and 1b illustrate apparatus, indicated generally at **40**, for cutting vegetation and simultaneously treating the remaining stems of the cut vegetation with a treatment fluid. The treatment fluid may be any treatment fluid which is applied to vegetation such as a growth regulator, herbicide, pesticide, fungicide, fertilizer or biological agent, depending on the desired result. Preferably, the treatment fluid is water-born. However, the treatment fluid may be born by any substance which combines with the treatment fluid to produce a non-viscous, flowable fluid. The apparatus **40** delivers the treatment fluid to the underside of the cutting blade so that a stream of treatment fluid is continuously available to the remaining stems of the cut vegetation at the time that the vegetation is cut. It has been discovered that a physical phenomenon occurs at the time that vegetation is cut. Fluid in the vicinity of the cut end of the remaining stem of the plant is drawn into the translocation stream in zero time, and migrates through the translocation stream to the root system of the plant. This phenomenon has been termed, and is referred to herein as, the "Burch effect".

The Burch effect has led to the development of an apparatus and method, referred to herein as the "BURCH WET BLADE^{™} system", which takes advantage of the Burch effect to minimize the amount of treatment fluid required to treat the vegetation, and to maximize the efficacy of the treatment. Specifically, the BURCH WET BLADE^{™} system does not broadcast the treatment fluid, such as by spraying or by treating and spreading treated cuttings, onto the surrounding ground or into the atmosphere. At least about 75-95% of the treatment fluid which is continuously available at the time that the vegetation is cut is absorbed into the translocation stream of the remaining stems of the cut vegetation. Accordingly, practically none of the treatment fluid is wasted, is inadvertently applied to desirable vegetation, or contaminates the surrounding soil and the underground water system.

The BURCH WET BLADE^{™} system may be configured for use with any apparatus **40** having at least one cutting blade and a means for delivering a continuous stream of treatment fluid to the underside of the cutting blade. For example the apparatus **40** may be a push lawnmower, a conventional power lawnmower, a riding lawnmower, an engine driven tractor, a bushog mower, a batwing mower, a harvester, a hydraulic feller buncher, a high speed saw head, a high speed shear head, a sickle bar, a multiple disk mower, a reel mower, a flail mower or a mower head attached to the end of a hinged boom arm, as long as the mower is equipped with suitable means for delivering the continuous stream of treatment fluid to the cut vegetation. In addition to cutting and treating vegetation along right-of-ways and highway medians and roadsides, there are numerous other applications in vegetation management, such as agricultural, turf, ornamental, forestry, and aquatics, wherein the utilization of a non-broadcasting apparatus and method for cutting and treating vegetation is useful, beneficial and practical, including the application of biological agents to the internal translocation streams of plants due to the reduced risk of exposure and the increased efficacy.

For purposes of illustration only, FIG. la is a perspective view of a power lawnmower **41** equipped with the BURCH WET BLADE^{™} system. FIG. 1b is a perspective view of a bushog mower **42** equipped with the BURCH WET BLADE^{™} system and attached to the rear of a tractor **43.** The bushog mower **42** is utilized herein only to illustrate preferred embodiments of the BURCH WET BLADE^{™} system. As previously stated, the BURCH WET BLADE^{™} system may be utilized with any apparatus **40** for cutting vegetation and simultaneously treating the cut vegetation with a treatment fluid, and for numerous other vegetation management applications.

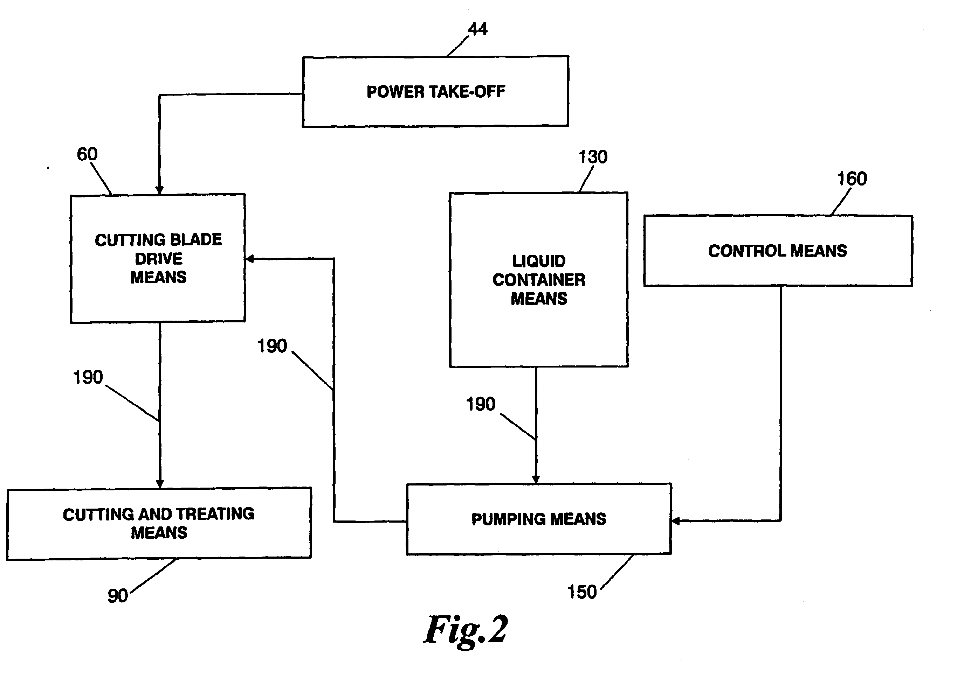

FIG. 2 is a schematic flow diagram of the preferred components of the BURCH WET BLADE^{™} system. Preferably, bushog mower **42** is powered by a conventional power take-off **44** from the tractor **43.** The power take-off **43** cooperates with cutting blade drive means **60** for driving cutting and treating means **90.** Fluid container means **130** is provided for containing the treatment fluid in a plurality of sealed cells, as will be described hereinafter. Pumping means **150** pumps the treatment fluid from the fluid container means **130** through the cutting blade drive means **60** to the cutting and treating means **90.** Flow control means **160** is provided for metering the amount of the treatment fluid which is delivered by pumping means **150** to cutting and treating means **90.** Fluid conduit means **190** defines a continuous fluid passageway for delivering the treatment fluid from fluid container means **130** to cutting and treating means **90** which is small enough in diameter so that the passageway is continuously filled with treatment fluid regardless of the ground speed of the mower under normal mowing conditions. Thus, the fluid conduit means **90** delivers a continuous stream of treatment fluid at a variable fluid column rate of flow which results in a constant volume of treatment fluid, usually measured in gallons per acre, being applied to the area being treated, while the fluid passageway remains completely filled.

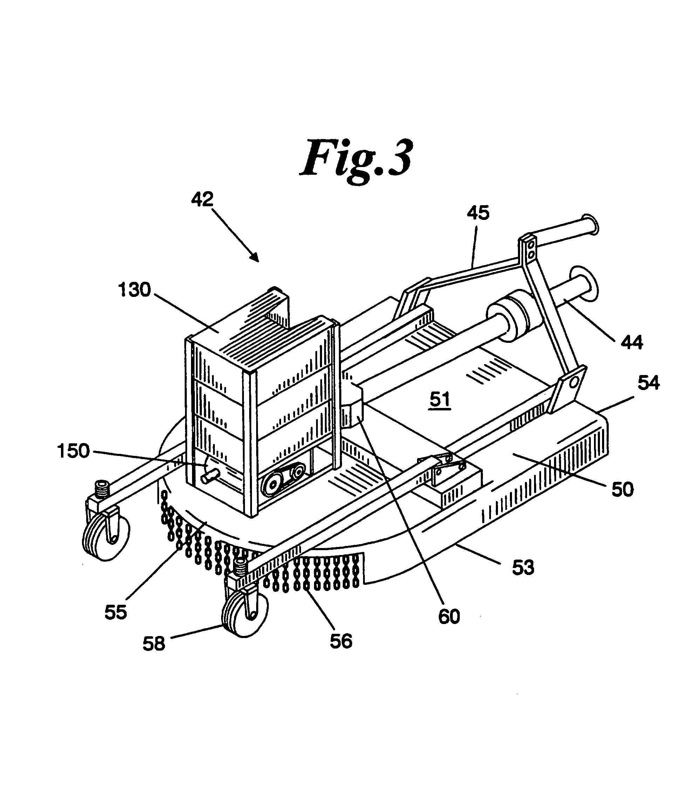

FIG. 3 is an enlarged perspective view of the bushog mower **42.** Bushog mower **42** may be any conventional bushog mower. As shown, the bushog mower **42** is a model A-72 manufactured by Alamo Industrial of Seguin, Texas, which is modified to be equipped with the BURCH WET BLADE^{™} system. The cutting blade drive means **60** of bushog mower **42** is powered by the power take-off **44** from tractor **43.** Power take-off **44** may comprise a rotating drive shaft (not shown) which cooperates with cutting blade drive means **60** as will be described to rotate cutting and treating means **90** at speeds between about 12,000 feet per minute (fpm) and 19,000 fpm at the tip of the cutting blade. Accordingly, each cutting blade of the bushog mower **42** may approach a speed of about two hundred (200) miles per hour.

Bushog mower **42** comprises a mower deck **50** for mounting cutting blade drive means **60** thereto and for housing cutting and treating means **90.** Fluid container means **130** and pumping means **150** are preferably mounted to mower deck **50,** but may be mounted to tractor **43.** Flow control means **160** and fluid conduit means **190** are mounted to mower deck **50** and to tractor **43** as required. One end of attachment means **45** is mounted to mower deck **50,** and the other end is secured to tractor **43** so that mower **42** may be pulled behind the tractor.

Mower deck **50** may be any size and shape necessary to mount cutting blade drive means **60** thereon, and to house cutting and treating means **90.** As shown, mower deck **50** comprises a generally planar, horizontal topside **51,** a generally planar, horizontal bottomside **52** opposite topside **51,** a pair of opposed, generally planar sides **53** depending vertically downward from topside **51,** a generally planar front edge **54** depending vertically downward from topside **51,** and an arcuate rear edge **55** depending vertically downward from topside **51.** Horizontal bottomside **52** and vertically depending sides **53,** front edge **54** and rear edge **55** form an integral housing for enclosing cutting and treating means **90.** Rear edge **55** preferably comprises a plurality of debris chains **56** for preventing large objects, such as stones, from being ejected rearwardly from underneath the mower. A second plurality of debris chains **56** depending downwardly from bottomside **52** may be provided for preventing large objects from being ejected frontwardly from underneath the mower.

Mower deck **50** has a central opening **57** therethrough for receiving cutting blade drive means **60** therein as will be described. At least one, and preferably two, wheels **58** are secured to the topside **51** of mower deck 50 for supporting the cutting blades of the mower **42** at a suitable height above the ground. The wheels **58** are preferably adjustable so that the elevation of the mower deck **50,** and thus the distance of the cutting blades from the ground, may be positioned at any height. The mower deck **50,** as described thus far, is a conventional mower deck of a bushog mower and may be replaced with any mower deck adapted for mounting cutting blade drive means **60** thereon and housing cutting and treating means **90.**

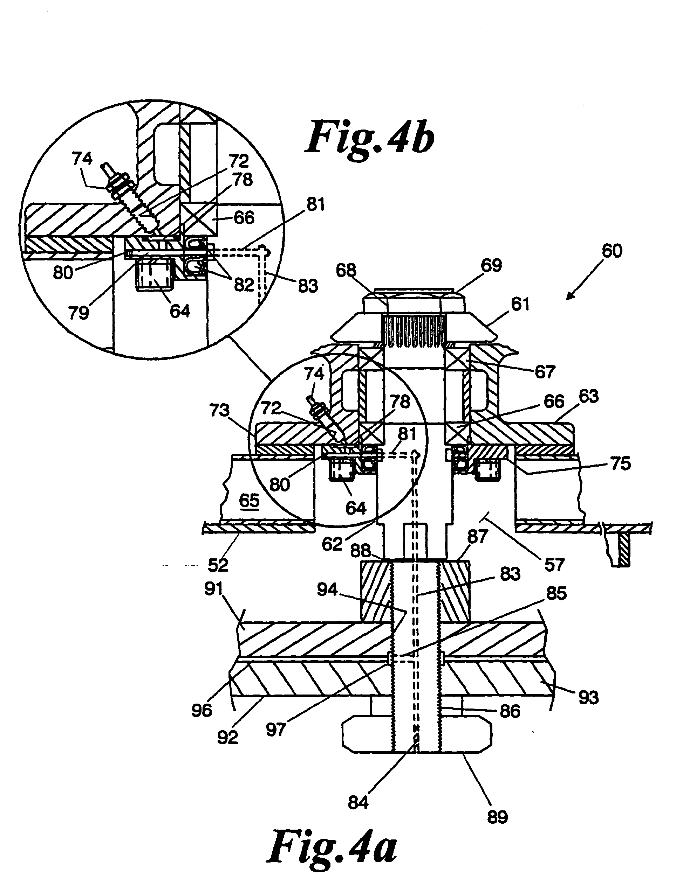

The cutting blade drive means **60** is mounted to the topside **51** of the mower deck **50** adjacent the central opening **57.** A power means, such as a gasoline engine or a hydraulic motor, for powering cutting blade drive means **60** may be secured to the topside **51** of the mower deck **50.** As previously described, however, cutting blade drive means **60** is preferably powered by power take-off **44** from tractor **43.** FIG. 4 is a sectional view of the cutting blade drive means **60** of the bushog mower **42.** The cutting blade drive means **60** comprises a bevel gear **61** for cooperating with a driving gear (not shown) provided on the end of the rotating drive shaft of the power take-off **44.** Bevel gear **61** in turn transfers the torque from the rotating drive shaft of the power take-off **44** to a drive shaft **62** which is rotatably received in central opening **57** of mower deck **50.** The drive shaft **62** is rotated at a rate determined by the revolutions per minute of the rotating drive shaft of the power take-off **44** (or hydraulic motor) and the ratio of the teeth of the driving gear to the teeth of the bevel gear **61** (or the ratio of the hydraulic pump to the hydraulic motor).

Cutting blade drive means housing **63** is secured by capscrews **64** to an I-beam stiffener **65** which is fixed to the topside **51** of mower deck **50.** Annular, lower spherical bearing **66** and annular, upper spherical bearing **67** are positioned within a central opening provided in housing **63** to permit drive shaft **62** to rotate freely. The upper end **68** of drive shaft **62** is externally threaded to receive a hex nut **69** for securing bevel gear **61** thereon. The lower end **70** of drive shaft **62** is likewise externally threaded to receive a hex nut **71** for securing cutting and treating means **90** thereon as will be described. The cutting blade drive means **60,** as described thus far, is a conventional cutting blade drive means of a bushog mower and may be replaced by any conventional cutting blade drive means adapted to transfer torque to rotating drive shaft **62** for driving cutting and treating means **90.**

Most importantly, an opening **72** provided in the base **73** of cutting blade drive means housing **63** is tapped and threaded to receive a fluid-tight fitting **74.** Fitting **74** is adapted to be in fluid communication with fluid container means **130** as will be described. An annular flange **75** is secured to the underside of the base **73** of housing **63** by capscrews **64.** Flange **75** comprises a medial wall **76** having a circumferential pocket **77** formed therein. A well **78** is formed in the upper surface of the flange **75** opposite opening **72** in housing **63.** The well **78** terminates in a radial bore **79** formed in flange **75.** Bore **79** is closed by a fluid-tight setscrew **80** at one end and extends inwardly to pocket **77.**

A first radial bore **81** is formed in drive shaft **62** adjacent the pocket **77** of flange **75.** Annular upper and lower seals **82,** such as Federal Mogul Part No. 62-85-8, form a fluid-tight seal between the pocket **77** and the external surface of drive shaft **62** so that bore **79** of flange **75** is in continuous fluid communication with bore **81** of drive shaft **62.** Bore **81** extends inwardly and terminates in a longitudinally extending axial bore **83** formed in drive shaft **62** and closed by a fluid-tight set screw **84.** A second radial bore **85** formed in drive shaft **62** extends outwardly from axial bore **83** for communicating with cutting and treating means **90** as will be described. The setscrew **84** is guarded, such as by countersinking as shown, from striking immovable objects and is removable to permit clean-out of axial bore **83.**

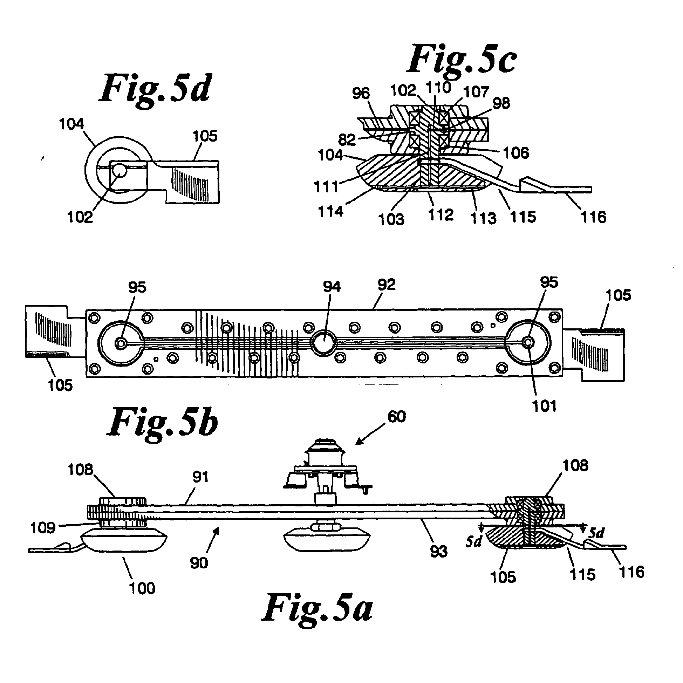

FIG. 5a is an elevation view and partial sectional view, and FIG. 5b is a top view, of the cutting and treating means **90** of the bushog mower **42.** Cutting and treating means **90** comprises blade carrier **92** and at least one cutting blade assembly **100.** Preferably, as shown, cutting and treating means **90** comprises a pair of radially opposed cutting blade assemblies **100.** Blade carrier **92** preferably comprises an upper half **91** and a reverse, or mirror, lower half **93** secured to the upper half in fluid-tight arrangement. Lower half **93** has a plurality of internally threaded holes for receiving a plurality of countersunk hex head bolts therein to secure upper half **91** to lower half **93.** A suitable gasket (not shown) may be utilized to provide a fluid-tight seal between upper half **91** and lower half **93.** A central opening **94** is provided at the center of blade carrier **92** for receiving drive shaft **62** of cutting blade drive means **60** therethrough. An opening **95** is also provided in carrier blade **92** for receiving each at least one cutting blade assembly **100** therethrough adjacent a radially outer end of the blade carrier.

As best shown in FIG. 4, the lower end **86** of drive shaft **62** received in central opening **94** of blade carrier **92** is externally threaded with male threads. The central opening **94** of blade carrier **92** is internally threaded, preferably with female threads to engage the male threads of lower end **86** of drive shaft **62** so that the blade carrier remains tightly secured to the cutting blade drive means **60.** An annular spacer **87** is received on drive shaft **62** between a shoulder **88** provided on the shaft and the upper half **91** of blade carrier **92** for spacing the blade carrier from the bottomside **52** of mower deck **50.** Spacer **87** is made of a hard, rigid metal such as 5160 steel, while blade carrier **92** is made of a softer, somewhat flexible metal for a purpose to be described. A lock washer and a hex head jam nut **89** are threaded onto the lower end **86** of drive shaft **62** to secure spacer **87** and blade carrier **92** tightly against shoulder **88.**

A fluid channel **96** (FIG. 4) is formed in upper half **91** and lower half **93** of blade carrier **92** and extends outwardly from central opening **94** in the direction of opening **95.** A first circumferential pocket **97** is formed in a medial portion of central opening **94** adjacent second radial bore **85** of drive shaft **62** so that channel **96** is in continuous fluid communication with radial bore **85** as the shaft rotates the cutting and treating means **90.** Channel **96** terminates in a second circumferential pocket **98** (FIG. 5c) formed in a medial portion of opening **95** so that blade carrier **92** is in fluid communication with each at least one cutting blade assembly **100.**

As shown in FIG. 5c, cutting blade assembly **100** comprises a shaft **102** which is rotatably received in opening **95** so that the cutting blade assembly can rotate relative to the blade carrier **92** if the cutting blade **105** strikes an immovable object, such as the top of a buried rock. The upper end **101** of shaft **102** has a hex head jam nut formed thereon for removing and replacing a cutter blade hub **104** on blade carrier **92** as will be described. The lower end **103** of shaft **102** is externally threaded with male threads for receiving the cutting blade hub **104** thereon. Cutting blade hub **104** is internally threaded, preferably with female threads to engage the male threads of lower end **103** of shaft **102** so that the cutting blade hub remains tightly secured to the shaft of the cutting blade assembly.

An annular lower spherical bearing **106** and an annular upper spherical bearing **107** are press fit into opening **95** of blade carrier **92** to permit shaft **102,** and thus cutting blade assembly **100,** to rotate as required. An upper boss **108** is welded to the upper half **91** of the blade carrier **92,** and a lower boss **109** is welded to the lower half **93** of the blade carrier **92** to secure the upper and lower bearings in opening **95.** The cutting blade assembly **100,** as described thus far, is a conventional cutting blade assembly for a bushog mower and may be replaced with any cutting blade assembly adapted for mounting at least one cutting blade **105** on blade carrier **92** for cutting vegetation and treating the cut vegetation with a treatment fluid.

A radial bore **110** is formed in shaft **102** adjacent the circumferential pocket **98** of blade carrier **92.** Annular upper and lower seals **82,** such as Federal Mogul Part No. 62-85-8, form a fluid-tight seal between the pocket **98** and the external surface of shaft **102** so that the radial bore **110** of the shaft is in continuous fluid communication with the channel **96** of carrier blade **92.** Radial bore **110** extends inwardly and terminates in a longitudinally extending axial bore **111** formed in shaft **102** and closed by a fluid-tight plug **112** which is welded to the underside of cutting blade hub **104.** The plug **112** is stepped to define a fluid reservoir between one-half of the lower surface of the lower end **103** of shaft **102** and one-half of the upper surface of the plug.

A bore **113** is formed in cutting blade hub **104** and closed by a fluid-tight set screw **114** on the side opposite the cutting blade **105.** The bore **113** extends outwardly from the fluid reservoir in the direction of cutting blade **105** and terminates adjacent a small gap **115** between the cutting blade hub **104** and the underside **116** of the cutting blade. The gap **115** is preferably between about .25 and 1.0 inches wide, and more preferably is about .5 inches wide. It has been discovered that the width of gap **115** is essential to the operation of the BURCH WET BLADE^{™} system. If the gap **115** is too wide (i.e., greater than about 1.0 inch wide), there is insufficient capillary attraction of the treatment fluid to the underside **116** of the cutting blade **105** to maintain a continuous stream of treatment fluid. If the gap **115** is too small (i.e., less than about .25 inches wide), the droplets of treatment fluid exiting the bore **113** are not thinned and the capillary attraction may not be sufficient to maintain the continuous steam of treatment fluid on the underside **116** of the cutting blade **105.** Accordingly, the treatment fluid may be broadcast and contaminate the surrounding soil and the underground water system. Bore **113** may also be rifled to impart a slight vortex to the column of treatment fluid exiting the bore. It is believed that the vortex motion of the column improves the capillary attraction of the continuous stream of treatment fluid to the underside of the cutting blade by preventing the droplets from expanding radially in the gap **115.**

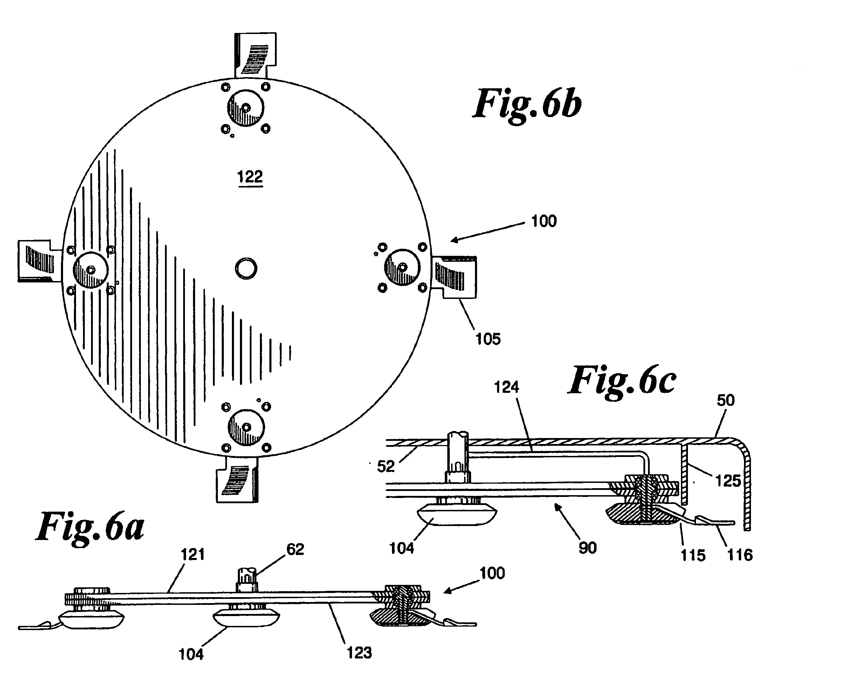

FIG. 6a is an elevation view and partial sectional view, and FIG. 6b is a top view, of an alternative embodiment of the cutting and treating means **90** of the bushog mower **42.** The cutting and treating means **90** comprises a disk-shaped blade carrier **122** and four orthogonally spaced cutting blade assemblies **100.** The disk blade carrier **120** preferably comprises an upper half **121** secured to a lower half **123** as previously described and as illustrated in the partial sectional view of FIG. 6a. However, second radial bore **85** formed in drive shaft **62** may be located above the top surface of the disk blade carrier **122** for communicating with a conduit **124** extending between the second radial bore and axial bore **111** of shaft **102** in the manner previously described as illustrated in FIG. 6c. When conduit **124,** or any other fluid treatment conduit is located above the disk blade carrier **122** and below the mower deck **50,** an annular ring guard **125** depending vertically downward from the bottomside **52** of the mower deck is preferably utilized to prevent large objects, such as stones, from striking and damaging the conduit **124.**

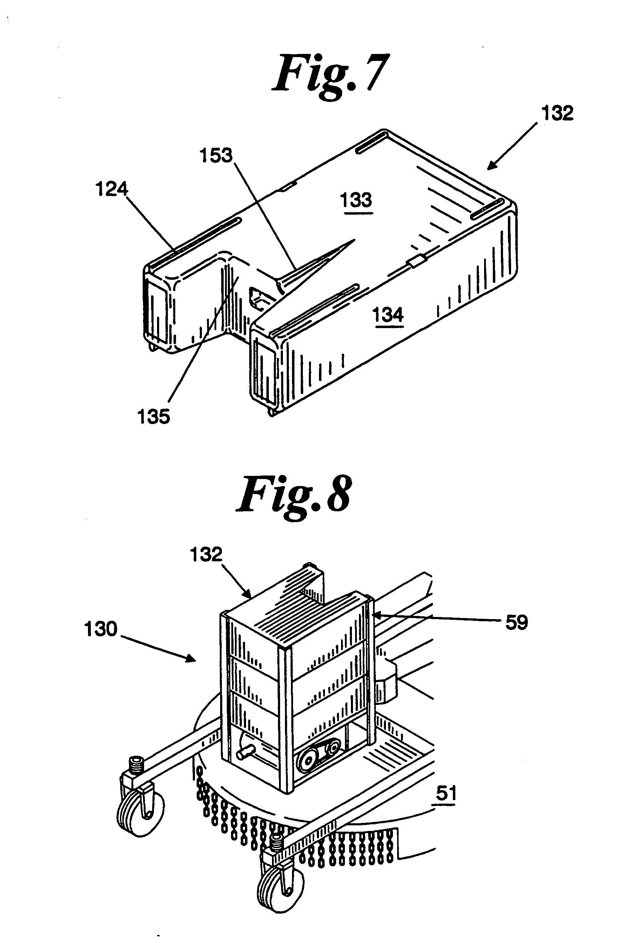

FIG. 7 is a perspective view of the fluid container means **130** of the bushog mower **42.** Fluid container means **130** comprises at least one fluid container cell **132,** referred to herein as a Burch FLO-THRU CELL^{™}, made of a material which is substantially resistant to ultraviolet light, such as polyurethane, polyethylene or polyvinylchloride (PVC) plastic. Preferably, as shown, fluid container means **130** comprises a plurality of FLO-THRU CELLS^{™} **132** removably stacked and supported on the topside **51** of mower deck **50** between stanchions **59.** Cells **132** are restrained against horizontal movement by stanchions **59,** and a strap (not shown) may be utilized to restrain the cells **132** against vertical movement. The FLO-THRU CELLS^{™} **132** may be filled with the treatment fluid at a remote location and then transported to the worksite to prevent the possibility of a spill that may contaminate the surrounding soil and the underground water supply at the worksite. The cells **132** may also be filled under vacuum and hermetically sealed to preserve the potency of the formulation. Thus, the Burch FLO-THRU CELLS^{™} provide an environmentally safe and effective means for supplying the treatment fluid to the mower **42.** It should be noted that fluid container means **130** may be utilized with a variety of rotary mowers and is not limited to use with the bushog mower **42** described herein.

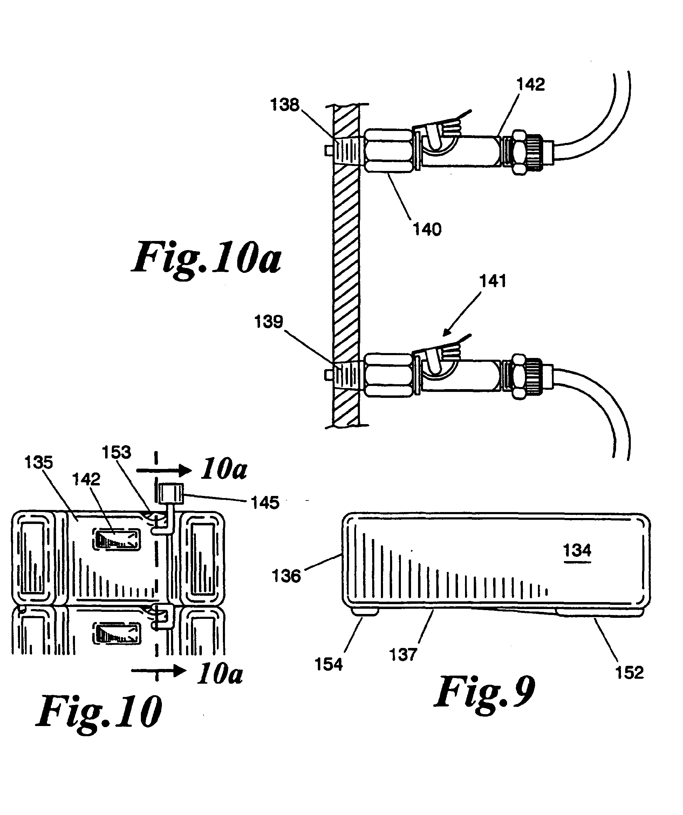

FIG. 8 is a perspective view, FIG. 9 is a side view and FIG. **10** is an end view of a FLO-THRU CELL^{™} **132** of the fluid container means **130** of the bushog mower **42.** Each cell **132** comprises a topwall **133,** sidewalls **134,** a front endwall **135,** a rear endwall **136** and a bottomwall **137.** Each cell **132** further has an inlet port **138** and an outlet port **139** formed therein. As illustrated in FIG. 10a, each inlet port **138** is configured with the female end **140** of a double end shutoff fitting **141,** such as a Parker POLY-TITE^{®} Fitting Part No. 398PD, manufactured by Parker Hannifin Corporation of Otsego, Michigan, to receive the male end **142** of the coupler fitting. The male end **142** of the fitting comprises a spring-loaded release arm so that the fitting **141** may be readily disconnected to replace an empty FLO-THRU CELL^{™} **132.** A first segment of flexible tubing extends outwardly from the lowermost cell **132** and is connected to a second segment of flexible tubing with a Parker POLY-TITE^{®} bulkhead fitting through the wall of the housing of the pumping means **150.** The second segment of flexible tubing passes through the pumping means **150** and terminates at the fitting provided on the housing **63** of the cutting blade cutting blade drive means **60.**

As seen in FIG. 10, an in-line filter and breather cap **145** allows ambient air to enter the fluid container cell **132** so that a partial vacuum does not develop and inhibit the flow of the treatment fluid as pumping means **150** extracts the treatment fluid from the cell. Each FLO-THRU CELL^{™} **132** further has a handhold **142** disposed on front endwall **135** and rear endwall **136** for assisting an operator to transport a filled cell. As seen in FIGS. 7 and 9, bottomwall **137** of cell **132** comprises a guide **152** and feet **154.** Guide **152** slidably engages a groove **153** on the topwall **133** of a lower cell **132** and thereby substantially prevents lateral movement of the stacked FLO-THRU CELLS^{™} **132.** In addition, feet **154** are also in contact with notches **124** on topside **133** to minimize relative motion between adjacent stacked cells **132.**

A single FLO-THRU CELL^{™} **132** may be utilized if only a small area is to be cut, and thus a relatively small amount of treatment fluid is to be applied to the cut vegetation. A single cell **132** may also be utilized if it is desired to apply a predetermined number of FLO-THRU CELLS^{™} containing the same treatment fluid to an area, or if it is desired to apply different treatment fluids to the same area. For example, a first FLO-THRU CELL^{™} pre-filled with a fluid crabgrass herbicide treatment may be used to simultaneously apply crabgrass herbicide to the remaining stems of the vegetation at the same that the vegetation is cut. Thereafter, the FLO-THRU CELL^{™} containing the crabgrass herbicide may be removed and replaced with a second FLO-THRU CELL^{™} containing a cleansing solution to flush the fluid conduit means **190.** The FLO-THRU CELL^{™} containing the cleansing solution may then be removed and replaced with a third FLO-THRU **CELL^{™}** containing a fluid fungicide. The height of the cutting blade above the surface of the ground is reduced to expose the remaining stems to the cutting blade, and the fungicide is applied as the vegetation is cut again.

However, it is preferred that at least two FLO-THRU CELLS^{™} **132** be used so that the level of the treatment fluid does not fall below the level of the outlet port **139** of the lowermost cell regardless of the orientation of the cutting blades of the mower relative to the FLO-THRU CELLS^{™} **132.** The use of a plurality of FLO-THRU CELLS^{™} **132** permits an area to treated at one time which would otherwise be too large to be safely treated with a single fluid container cell. Further, the use of a plurality of FLO-THRU CELLS^{™} **132** permits a large area to treated at one time without the need to repeatedly discontinue the cutting and treating operation to refill a single large fluid treatment container. Instead, the upper FLO-THRU **CELLS^{™} 132** may be readily removed and replaced with additional pre-filled cells.

Pumping means **150** (FIG. 3) pumps the treatment fluid from the fluid container means **130** to the cutting blade drive means **60** so that a stream of treatment fluid is continuously available to the translocation streams of the remaining stems of the cut vegetation at the time that the vegetation is cut. Pumping means **150** comprises any type of variable capacity pump for pumping widely varying amounts of the treatment fluid depending on the speed of the mower over the surface of the ground, as will be described. Preferably, however, pumping means **150** is a peristaltic pump of the type available from TAT Engineering of Branford, Connecticut, which pumps the treatment fluid through fluid conduit means **190** via waves of contraction at a pressure of about 5 psi produced mechanically by a series of rollers compressing the flexible tubing containing the treatment fluid.

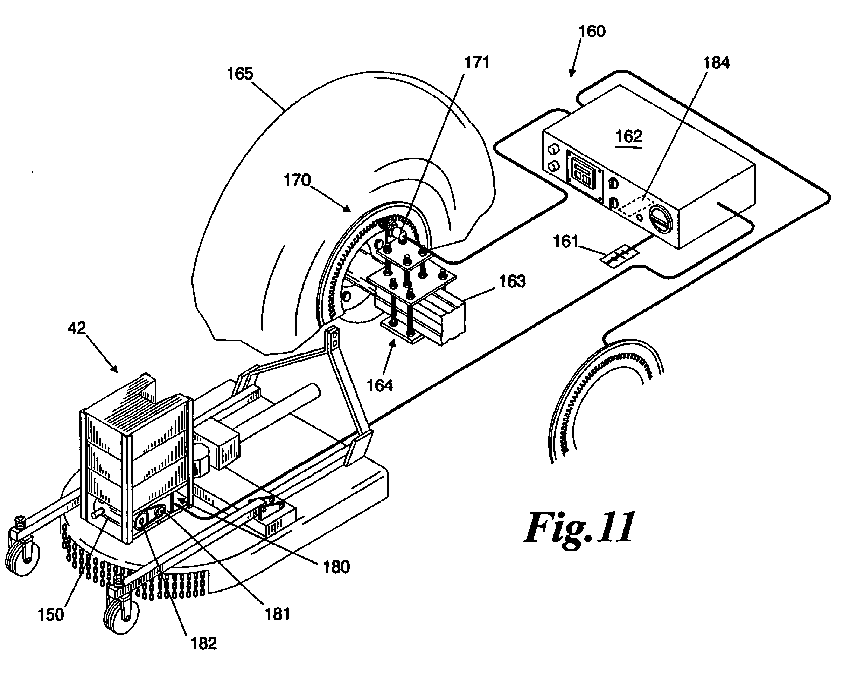

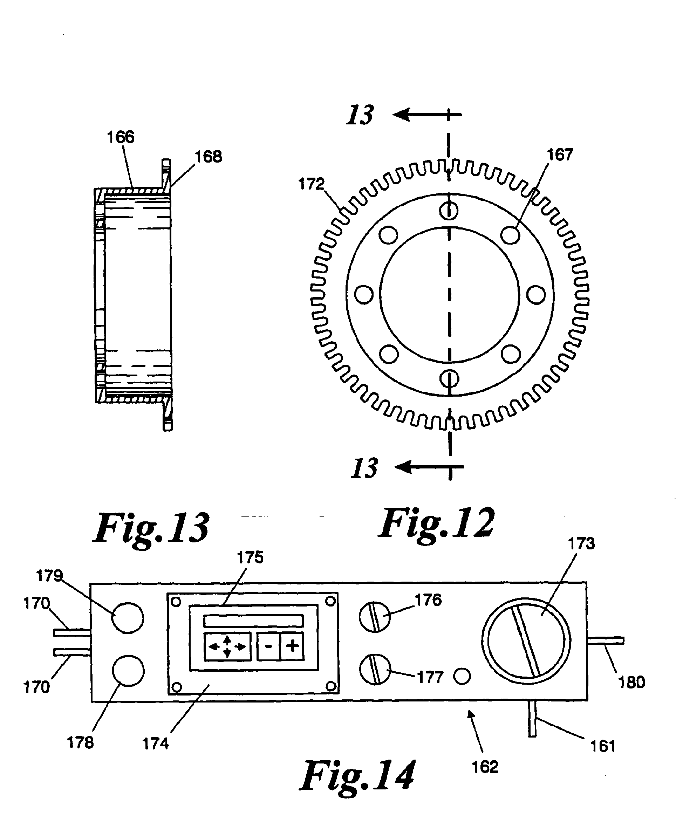

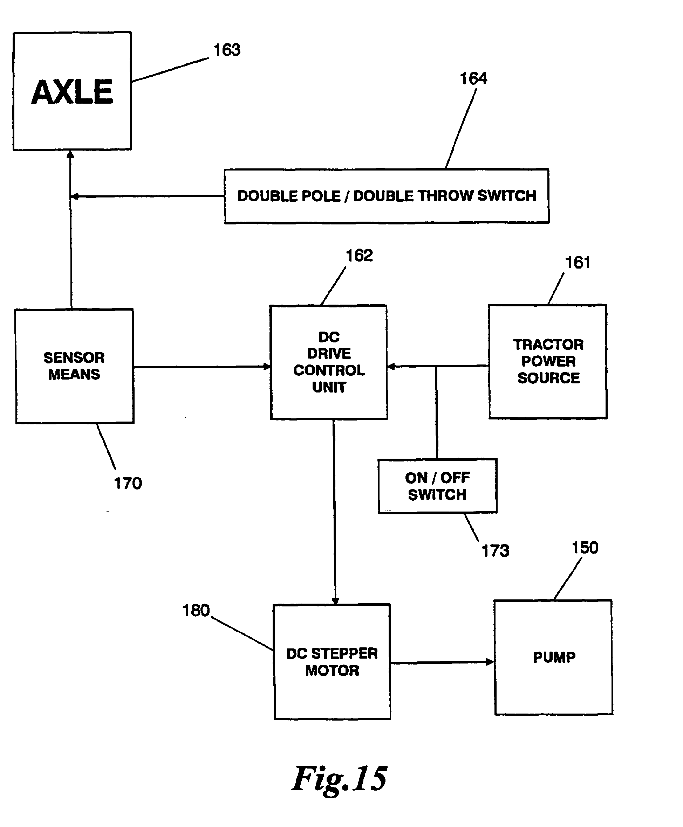

FIG. 11 is a perspective view of the preferred components of the flow control means **160,** and FIG. 15 is a schematic flow diagram illustrating the connection of the preferred components of the flow control means. Flow control means **160** comprises a control unit **162** which is preferably powered by a power source from the tractor **43,** such as **12** volt battery **161.** Control unit **162** is electrically coupled to a ground speed detection means **164** preferably located on the rear axle **163** of tractor **43** adjacent each wheel **165.** As shown in FIGS. 12 and 13, the detection means **164** comprises a cup-shaped flange carrier **166** having a hole pattern comprising holes 167 for receiving the lugs of the axle **163.** The flange carrier **166** is positioned over the outer end of the axle **163** and extends inwardly so that the radially outwardly extending flange **168** of flange carrier **166** is adjacent an adjustable sensing means **170** secured to axle **163.** Sensing means **170** is typically positioned within a removable housing (not shown) which protects the sensor **171** from the elements and debris which may come into contact with the axle **163.**

Flange **168** is preferably made of a ferrous metal and comprises a predetermined plurality of radial teeth **172** spaced apart on the periphery of the flange. Sensor **171** is preferably a proximity sensor that detects the passing teeth **172** as the flange carrier **166** rotates with the shaft of axle **163.** Sensor **171** may be any electronic sensor such as an inductance, magnetic or optical sensor, which produces an electrical signal proportional to the angular velocity of the flange carrier **166,** and thus the speed of the wheel **165** of the tractor **43.** A sensor which can detect through a viscous fluid, such as oil, may also be utilized so that the sensor may be located in the gear box of the rear axle, or in a speedometer cable attached to the rear axle of the tractor. Preferably, a separate ground speed detection means **164** is secured to each wheel 165 of the tractor **43** and the electrical signal from each detection means is provided to control unit **162.** Thus, the electrical signal having the greatest velocity value may be selected, or the electrical signals from both detection means **164** may be combined and averaged, or may be combined, averaged and multiplied by a correction factor, so that the most accurate estimate of the ground speed of the bushog mower **42** is determined.

FIG. 14 is a front view of the control unit **162,** manufactured by ESSCO, Inc., of Greensboro, North Carolina, of the flow control means **160.** The control unit **162** comprises an on-off switch **173** for providing power to the control unit from the 12 volt battery **161** of tractor **43.** Switch **173** is preferably a combination 12 volt to 24 volt DC voltage converter and a 24 volt DC voltage regulator. Control unit **162** further comprises a programmable operator interface, such as a Mitsubishi MTA-10 processor **174** for processing predetermined data provided by the operator, such as the width of the cut made by the cutting and treating means **90** and the volume of treatment fluid to be applied to the area treated, and the electrical signals from the ground speed detection means **164.** Processor **174** preferably comprises a data screen and keypad **175** for scrolling the command line displayed on data screen and for editing the predetermined data utilized by the processor **174** to determine the ground speed of the mower **42.**

Control unit **162** further comprises an on-off toggle switch **176** for powering pumping means **150,** and a by-pass toggle switch **177** for by-passing the pumping means, for example when the operator desires to move the tractor **43** without applying treatment fluid to vegetation. Control unit **162** further comprises a green light-emitting-diode (LED) **178** for indicating that the pumping means **150** is powered and operating (i.e., for example when the tractor **43** is moving, or the by-pass is engaged for flushing treatment fluid from the conduit means **190),** and a red LED **179** for indicating that the pumping means **150** is powered, but is not operating (i.e., for example when the tractor **43** is not moving).

Preferably, control unit **162** is also electrically coupled to a DC stepper drive motor **180** for driving the peristaltic pump of pumping means **150.** Processor **174** provides an electrical signal to stepper drive motor **180** that is proportional to the estimated ground speed of the mower **42,** and the stepper drive motor **180** drives the peristaltic pump in fine increments so that a controlled amount of treatment fluid is applied by the cutting and treating means 90 to the vegetation. Stepper drive motor **180** is preferably a 250 step linear drive motor of the type manufactured by Intelligent Motions Systems Inc., of Branford, Connecticut. The output shaft of stepper drive motor **180** is fixed to a first pulley **181** which drives a second pulley **182** fixed to the output shaft of the peristaltic pump of pumping means **150.** The ratio of the first pulley **181** to the second pulley **182** may be any ratio, but is preferably 1.0/1.5 so that the maximum speed of the peristaltic pump is not exceeded.

Control Unit **162** may further comprise a global positioning satellite (GPS) transceiver **184** for communicating with a remote base station via a satellite. The transceiver **184** receives and transmits position data relating to the location of the tractor **43** and the mower **42** as the vegetation is being treated with the treatment fluid. Accordingly, a permanent record of the area that was treated can be maintained for purposes of, for example, disputing the tort claims of farmers and owners of land adjoining the right-of-way or roadside that a toxic treatment fluid was broadcast onto land adjacent the intended treatment area.

In an alternative embodiment, the ground speed detection means **164** may be mechanically coupled to the pumping means **150.** For example, flange carrier **166** may comprise a sprocket in place of flange **168,** and sensor **171** may mechanically engage the radial teeth **172** of the sprocket to drive the peristaltic pump of pumping means **150.** Pumping means **150** may be directly driven by the sensor **171,** or may be driven by any type of gear box for converting the output of the sensor so that the maximum speed of the peristaltic pump is not exceeded.

Fluid conduit means **190** defines a fluid passageway extending between fluid container means **130** and cutting and treating means **90.** Fluid conduit means **190** delivers the treatment fluid to the underside of the cutting blade so that a stream of treatment fluid is continuously available to the vegetation at the time that the vegetation is cut. Fluid conduit means **190** preferably comprises a flexible tube **191** for example made of soft polyvinyl chloride (PVC), which extends from the bottommost FLO-THRU CELL^{™} **132** through the rollers of the peristaltic pump of pumping means **150** to the fluid-tight fitting **74** provided on the exterior of the housing **63** of the cutting blade drive means **60.** Fluid conduit means **190** further comprises well **78;** radial bore **79** and circumferential pocket **77** formed in flange **75;** radial bore **81,** axial bore **83** and radial bore 85 formed in drive shaft **62;** first circumferential pocket **97,** fluid channel **96,** and second circumferential pocket **98** formed in blade carrier **92;** radial bore **110** and axial bore **111** formed in shaft **102** of cutting blade assembly **100;** and radial bore **113** formed in cutting blade hub **104.** Fluid conduit means **190** terminates adjacent gap **115** opposite the underside **116** of the cutting blade.

It is believed that the constant availability of the stream of treatment fluid at the time that the vegetation is cut is critical to the efficacy of the treatment. The combination of the capillary attraction of the underside of the cutting blade and the vortex of the treatment fluid ensures that the treatment fluid will always be available to the translocation streams of the remaining stems of the vegetation at the time that the vegetation is cut regardless of the speed of rotation of the cutting blade, the ground speed of the mower or the orientation of the cutting blade relative to the FLO-THRU CELLS^{™}. Accordingly, all of the treatment fluid is absorbed into the translocation streams of the plants when vegetation is available to the cutting blade.

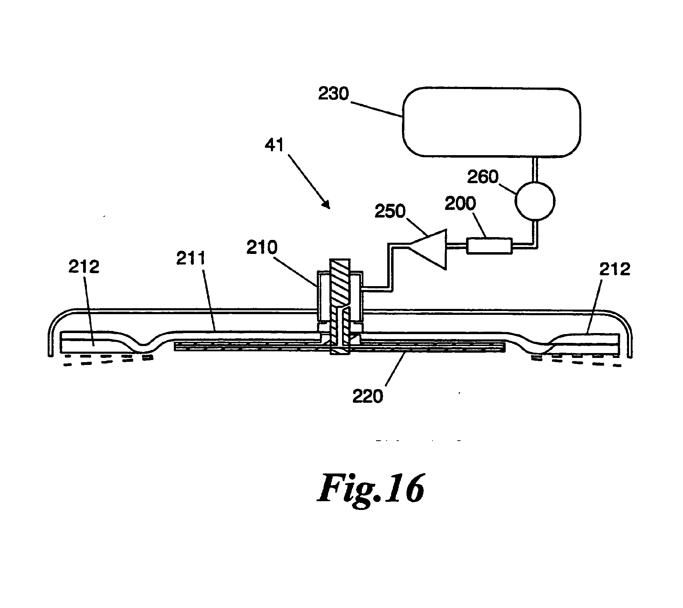

FIG. 16 is a schematic diagram illustrating the preferred components of the power lawnmower **41** shown in FIG. 1a. Preferably the power lawnmower **41** comprises a fluid container means **230,** a flow control means **260** and a pumping means **250** which are conceptually the same as fluid container means **130,** flow control means **160** and pumping **150,** respectively, as previously described. The primary variation being that the components of the power lawnmower **41** are scaled to the dimensions and capabilities of the lawnmower. A filter **200,** such as an in-line gasoline filter, may also be inserted before the pumping means **150** to filter particulate matter from the treatment fluid before it is introduced to the cutting blade drive means **210.** Cutting blade drive means **210** is conceptually the same as cutting blade drive means **60** previously described, but comprises a manifold **220,** referred to herein as the Burch WET BAR^{™}.

A typical blade **211** for a power lawnmower is made of soft metal, and is relatively thin and measures between about 18 and 30 inches in length. Thus, as indicated by the broken lines in FIG. 16, the blade **211** is flexible about the cutting blade drive means **210** so that the tip **212** of the blade **211** will deflect upwards if the blade strikes an immovable object. Accordingly, if the blade 211 were provided with a solid fluid conduit extending outwardly from the drive shaft of the cutting blade drive means **210,** the conduit would buckle as the blade flexes. The Burch WET BAR^{™} permits the BURCH WET BLADE^{®} system to be utilized on a power lawnmower having a flexible cutting blade.

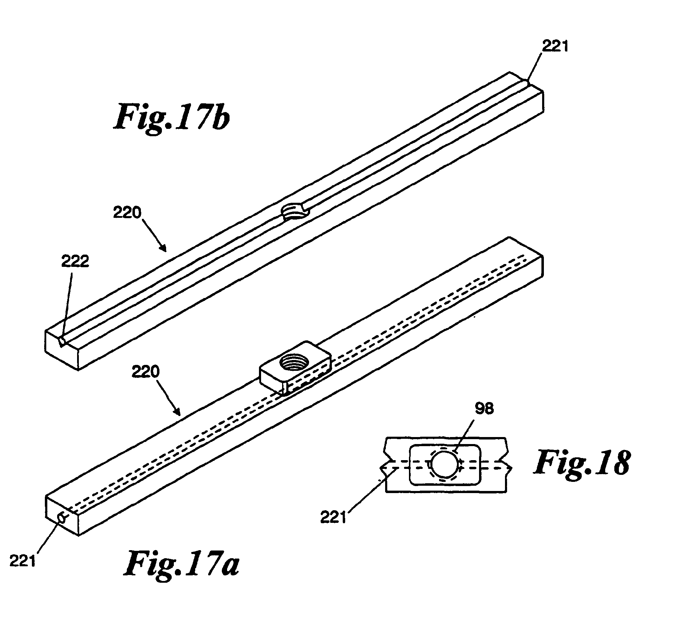

FIG. 17a is a perspective view of the Burch WET BAR^{™} **220** secured to the cutting blade drive means **210** of the power lawnmower 41, and FIG. 18 is a top view of the center portion of the Burch WET BAR^{™} shown in FIG. 17a. The WET BAR^{™} **220** comprises a fluid conduit **221** which is in fluid communication with fluid container means **230** in the manner previously described. Accordingly, a continuous stream of treatment fluid is delivered to the underside of the blade **211** and is continuously available to the cut vegetation at the time that the vegetation is cut. FIG. 17b is a perspective view of an alternative embodiment of the Burch WET BAR^{™} **220.** In this embodiment, a solid fluid conduit **221** is positioned in a longitudinal channel **222** formed in the top surface of the WET BAR^{™} **220,** and is welded to the WET BAR^{™} in a conventional manner. In still another embodiment, the thicker WET BAR^{™} **220** may be inverted and may replace the thinner blade 211 for appropriate applications.

### ALTERNATIVE EMBODIMENTS

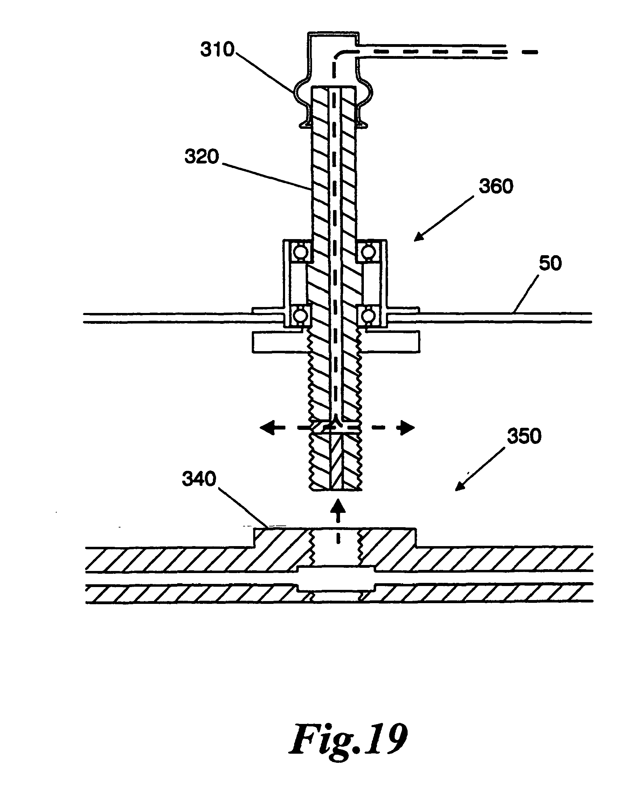

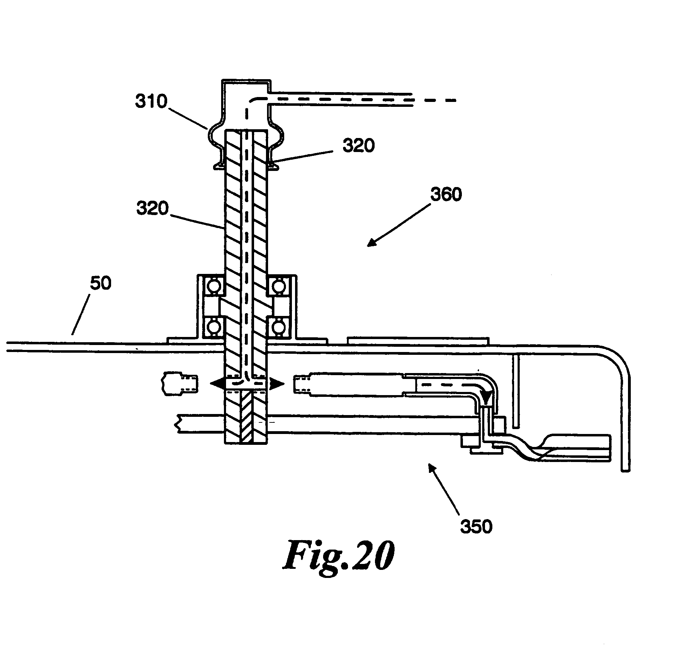

FIGS. 19 and 20 are sectional views of alternative embodiments of a portion of the cutting blade drive means **360** and a portion of the cutting and treating means **390** of a mower. The treatment fluid passes through a cap **310** covering one end of the drive shaft **320** of the cutting blade drive means **360.** The cap **310** may be any stationary cap which permits the treatment fluid to be transferred to the axial bore formed in the rotating drive shaft **320.** But preferably, cap **310** is a two-piece swivel, or universal ball, joint. In the embodiment illustrated in FIG. 19, the treatment fluid is transferred to the blade carrier **340** in the manner previously described in conjunction with FIG. 6. In the embodiment illustrated in FIG. 20, the treatment fluid is transferred to the blade cutting assembly **350** in the manner previously described in conjunction with FIG. 6a.

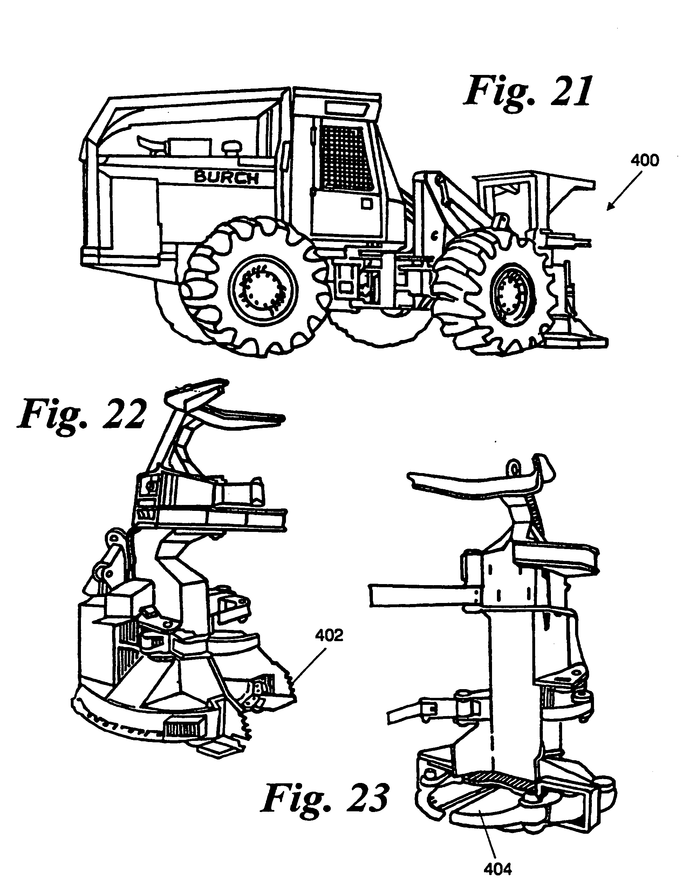

FIG. 21 is a perspective view of a hydraulic feller buncher attached to the forward boom arm of a tractor. Feller bunchers are used in forest management and rights of way. The feller buncher **400,** Figure 21, is a large piece of equipment capable of taking down trees.

FIG. 22 is a perspective view of a high speed saw head adapted for use on the hydraulic feller buncher of FIG. 21. When equipped with the saw head **402,** Figure 22, the feller buncher operates similar to a chain saw, however in this application, fluid is delivered to the bottom of the cutting edge, of the saw head, before the cut to facilitate delivery of fluids directly into the vascular system of the treated plant or tree.

FIG. 23 is a perspective view of a high speed shear head adapted for use on the hydraulic feller buncher of FIG. 21. When equipped a high speed shear head **404,** Figure 23, the feller buncher delivers a treatment fluid to the bottom of the cutting edge, of the high speed shear, before the cut facilitating delivery of fluids directly into the vascular system of the treated tree or plant.

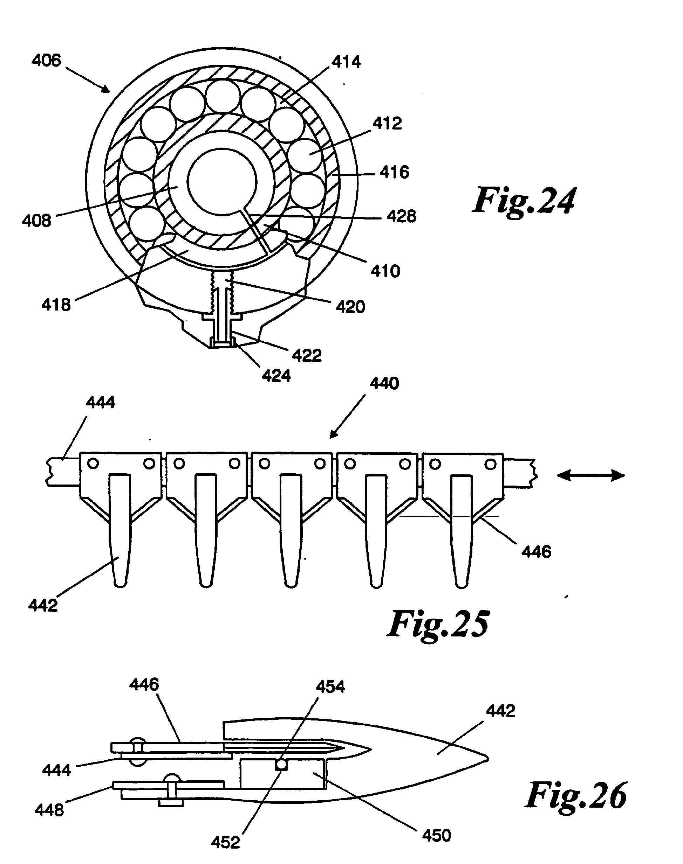

FIG. 24 is a partial sectional view of a portion of the fluid conduit means of the apparatus for cutting and treating vegetation according to the invention illustrated in FIGS. 25-32. Cutting mechanism other than rotary mowers, such as reel, flail bar, disk and sickle bar cutting apparatus, require controlled fluid delivery to the appropriate cutting edge at the appropriate time. The pulsing sealed hollow shaft fluid delivery apparatus **406,** Figure 24, has a ball bearing assembly and allows for timed controlled delivery of fluids. The pulsing sealed hollow shaft fluid delivery apparatus **406,** has a hollow stationary shaft **408** which is press fitted at the center. About shaft **408** is fitted an inside race **410** which are in contact with ball bearings **412** packed in a seal **414** within the outside race **416.** A hollow rotating shaft **418** is in sliding contact with the outside race **416.** The rotating shaft **418** is fitted with hollow spokes **420,** which are in communication with a fitting **422** having a nipple **424** for engagement with piping or tubing **426.** At least one port or slot **428** is tapped into the stationary shaft **408** and allows fluid to flow from the stationary shaft **408** to the hollow spoke **420.** During most of the rotation cycle the fluid in the system is static, from the hollow spoke **420** to just before the outlet port spaced from the blade. When slot **428** comes into alignment with hollow spoke **420** additional fluid is pulsed through the system resulting in fluid on the lower cutting edge of the blade. In this embodiment the outside fittings rotate for use with the flail bar and reel mowers.

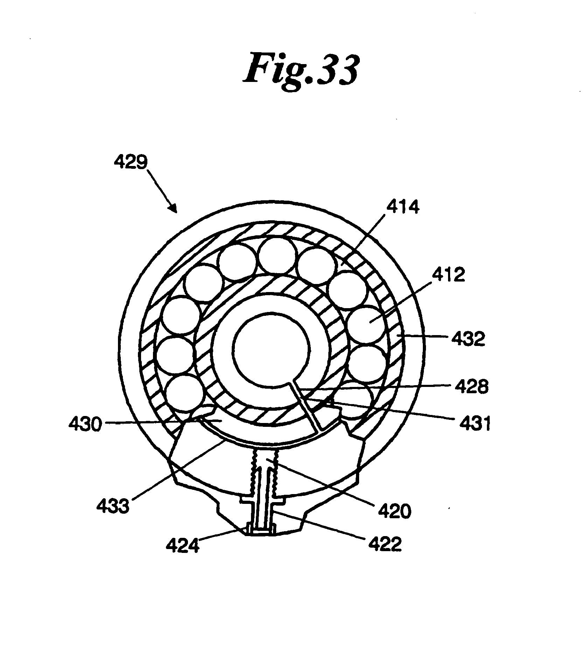

An alternative pulsing sealed hollow shaft fluid delivery apparatus **429,** Figure 33, can also be configured with a hollow rotating shaft **430** which at the center. About shaft **430** is an inside race **431** which are in contact with ball bearings **412** packed in a seal **414** within the press fitted outside race **432.** A stationary shaft **433** is in fixed contact with the outside race **432.** The stationary shaft **433** is fitted with hollow spokes **420,** which are in communication with a fitting **422** having a nipple **424** for engagement with piping or tubing **426.** At least one port or slot **428** is tapped into the rotating shaft **430** and allows fluid to flow from the rotating shaft **430** to the hollow spoke **420.** During most of the rotation cycle the fluid in the system is static, from the hollow spoke **420** to just before the outlet port spaced from the blade. When slot **428** comes into alignment with hollow spoke **420** additional fluid is pulsed through the system resulting in fluid on the lower cutting edge of the blade. In this embodiment the outside fittings are stationary and this device can be used as a timed distributor for sickle bar cutting systems.

FIG. 25 is a top view of a sickle bar according to the invention. The sickle bar type mowing apparatus **440,** Figure 25, having guards **442** and a reciprocating bar **444.** A series of blades **446** are mounted to the bar **444.**

FIG. 26 is an end view of the sickle bar of FIG. 25. The guards **442** being mounted to guard mount bar **448,** Figure 26. Seated in the guards **442** is a sickle bar manifold **450** having a delivery tube **452,** which may be welded, which provides fluid delivery through exit ports **454** in tube **452.** Fluid from the timed distributor is of a pulsing sealed hollow shaft fluid delivery apparatus **429** is connected for communication through tube **452.**

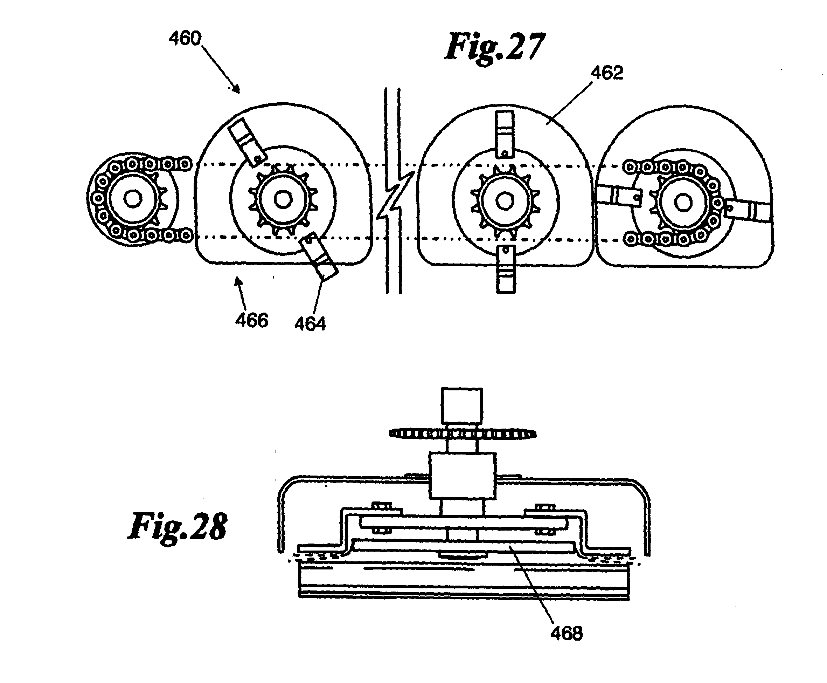

FIG. 27 is a top view of a multiple disk mower according to the invention. A disk type mowing apparatus **460,** Figure 27, uses a series of cutting decks **462.** Here, the blades **464** from the disks protrude from the apparatus in the front **466.**

FIG. 28 is a side view of one of the disk of the multiple disk mower of FIG. 27. The fluid delivery apparatus can be nearly identical to that of the rotary cutter using an elongated fluid delivery member **468,** Figure 28, to wet out the blades **464** of the disk type mower. Alternatively the disk mower could use the pulsing sealed hollow shaft fluid delivery system **406** to deliver timed pulse of treatment fluid to the blades of disk.

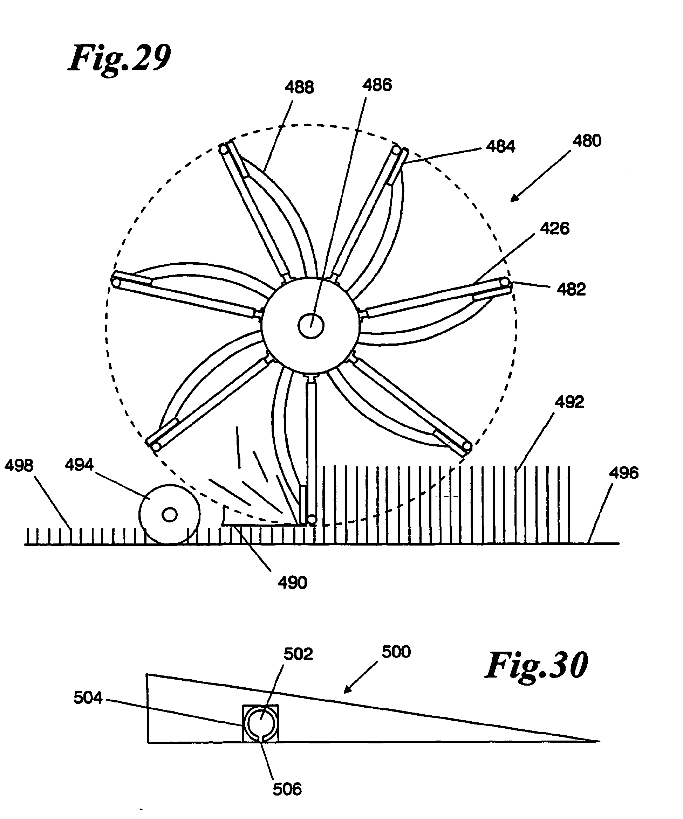

FIG. 29 is a side view of a reel mower according to the invention. A reel type mowing apparatus **480,** Figure 29, which utilizes the sealed hollow shaft fluid delivery apparatus **406,** described above, to deliver fluid to the bottom cutting edge **482** of the rotating blades **484.** This device uses a central axle **486** configured as fluid delivery apparatus **406.** Attached to the axle **486** are blade support spokes **488** as well as tubing **426** which facilitate fluid flow from the axle to the blade. The interactions between the rotating blades **484** and a stationary blade or anvil **490** effect both the cut of the vegetation **492** and the delivery of the treatment fluid directly into the plants vascular stream. A roller **494** facilitates movement over the ground **496** and fresh cut vegetation **498.** In this system the pulse of treatment fluid is timed to be released just before the blade comes into cutting contact with the vegetation. As with the rotary mower it can be connected to ground speed regulator which controls the amount of fluid being carried through the system over time.

FIG. 30 is an alternative enlarged view of the anvil **490** of the reel mower of FIG. 29. This alternative reel type mowing apparatus, which, instead of utilizing the sealed hollow shaft fluid delivery apparatus **406,** uses a standard, "non-wetable" reel, with a wetable stationary blade or anvil **500.** The stationary blade or anvil **500** has a machined groove **502** in which a fluid delivery tube **504** is welded into place. The fluid delivery tube has a continuous slot exit port **506** or porous metal or plastic tubing. This system is connected to a ground speed regulator for controlled release based on ground speed of the device.

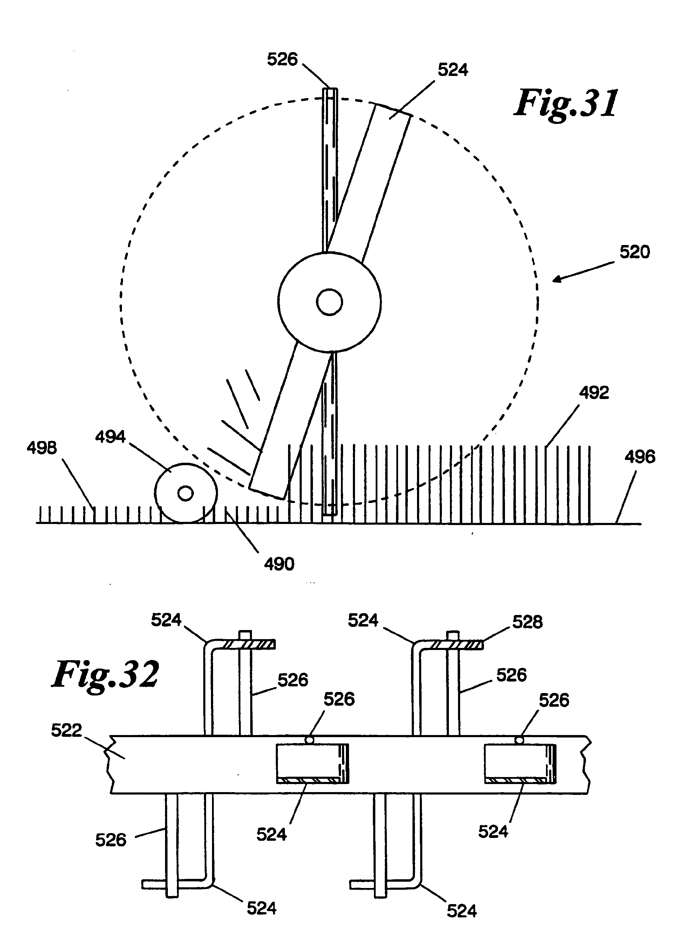

FIG. 31 is a side view of a flail mower according to the invention. The flail type mowing apparatus **520,** Figure 31, which is comprised of a drive shaft **522,** Figure 32, configured as pulsing sealed hollow shaft fluid delivery apparatus **406,** fitted with multiple blades **524** and multiple fluid delivery bars **526.** Fluids are delivered to each individual fluid delivery bar **526** by the pulsing sealed hollow shaft fluid delivery apparatus **406,** Figure 24, which allows for timed controlled delivery of fluids. In operation fluid is delivered to the cutting edge **528** just prior to the cut to facilitate delivery of fluids directly into the plants vascular system. Note that the blades are staggered to ensure an even cut across the width of the drive shaft **230.** This system can be connected to a ground speed regulator for controlled release based on ground speed of the device.

FIG. 32 is a top view of the flail mower of FIG. 31 and which helps depict the spacial relationship of the blades **524,** fluid delivery bars **526** with the drive shaft **522.**

FIG. 33 is a partial sectional view of an alternative embodiment of a portion of the fluid conduit means of the apparatus for cutting and treating vegetation according to the invention illustrated in FIGS. 25-32. In this embodiment the hollow center shaft **430** rotates while the outer stationary shaft **433,** hollow spokes **420,** fittings **422** and nipple **424** all remain stationary.

It is to be understood that the foregoing description and specific embodiments are merely illustrative of the best mode of the invention and the principles thereof, and that various modifications may be made to the apparatus by those skilled in the art without departing from the spirit and scope of the invention, which is therefore understood to be limited only by the scope of the appended claims.

## Claims

1. An apparatus for cutting vegetation and treating the cut vegetation with a treatment fluid, said apparatus comprising:
at least one cutting blade (105);
fluid container means (130) for containing the treatment fluid, said fluid container means in fluid communication with said at least one cutting blade; fluid conduit means (190) for delivering the treatment fluid in a stream from said fluid container means to the underside of said at least one cutting blade so that the treatment fluid is available to the cut vegetation at the time that the vegetation is cut, where said fluid conduit means (190) defines a fluid passageway through a hollow fluid delivery shaft (102; 406; 429); **characterized by** a flow control means (160) in communication with a ground speed detection means (164) for detecting the ground speed of the apparatus; wherein said flow control means (160) is in communication with a pumping means (150) for pumping the treatment fluid from said fluid container means to the underside of said at least one cutting blade.

2. An apparatus according to claim 1 wherein the flow control means (160) controls said pumping means for metering the amount of the treatment fluid delivered to said at least one cutting blade through said fluid conduit means.

3. An apparatus according to claim 1 further comprising a mower comprising
a generally planar mower deck (50);
cutting blade drive means (60) rotatably mounted to said mower deck; and
a blade carrier (92) secured to said cutting blade drive means; and
wherein said at least one cutting blade is rotatably mounted to said blade carrier.

4. An apparatus according to claim 3 further comprising a flow control means (160) coupled to said pumping means for metering the amount of the treatment fluid delivered to said at least one cutting blade through said fluid conduit means.

5. An apparatus according to claim 4 wherein said apparatus further comprises an in-line filter between the fluid container means and the hollow fluid delivery shaft.

6. An apparatus according to claim 1 wherein said ground speed detection means (164) comprises a cup-shaped sprocket carrier comprising a sprocket having a plurality of radial teeth thereon; and mechanical sensor means (170) for engaging the teeth of said sprocket, said sensor means mechanically coupled to said pumping means.

7. An apparatus according to claim 1 wherein said ground speed detection means (164)
comprises a cup-shaped flange carrier (166) comprising a flange having a plurality of radial
teeth thereon; and
electrical sensor means (170) for sensing the angular velocity of the teeth of said flange, said sensor means electrically coupled to said pumping means.

8. An apparatus according to claim 4 wherein said mower comprises a plurality of wheels and a separate one of said ground speed detection means (164) is provided adjacent each of said wheels of said mower.

9. An apparatus according to claim 4 wherein said flow control means further comprises a control unit (162) electrically coupled to said ground speed detection means for processing predetermined input data and an electrical signal produced by said ground speed detection to determine the amount of treatment fluid to be delivered to said at least one cutting blade from said fluid container means.

10. An apparatus according to claim 9 wherein said control unit (162) is electrically coupled to said pumping means (150) and said control unit produces an electrical signal for controlling the operation of said pumping means.

11. An apparatus according to claim 9 wherein said flow control means further comprises a stepper drive motor (180) and wherein said control unit (162) is electrically coupled to said stepper drive motor and produces an electrical signal for controlling the operation of said stepper drive motor.

12. An apparatus according to claim 9 wherein said control unit comprises a Global Positioning Satellite (GPS) transceiver for transmitting the location of said mower when the treatment fluid is delivered to said at least one cutting blade from said fluid container means.

13. An apparatus according to claim 3 wherein said blade carrier (92) has a central opening for receiving said cutting blade drive means and at least one opening spaced outwardly from the central opening, said blade carrier further having a channel formed therein extending between the central opening and the at least one opening spaced outwardly from the central opening.

14. An apparatus according to claim 13 wherein said blade carrier (92) comprises an elongate bar comprising an upper half secured to a lower half and wherein said at least one opening spaced outwardly from the central opening is located adjacent an opposed end of said bar and receives said at least one cutting blade therein.

15. An apparatus according to claim 13 wherein said blade carrier (92) comprises a disk and wherein the at least one opening spaced outwardly from the central opening is located adjacent the outer edge of said disk and receives said at least one cutting blade therein.

16. An apparatus according to claim 13 wherein said channel of said blade carrier (92) terminates in a second circumferential pocket formed on the at least one opening spaced outwardly from the central opening so that said blade carrier is in fluid communication with said at least one cutting blade.

17. An apparatus according to claim 16 wherein said at least one cutting blade comprises a shaft rotatably received in the at least one opening spaced outwardly from the central opening so that said at least one cutting blade can rotate relative to said blade carrier.

18. An apparatus according to claim 17 wherein said at least one cutting blade further comprises a cutter blade hub and said shaft comprises an upper end and a lower end, said upper end of said shaft having a hex head jam nut formed thereon for removing and replacing said cutter blade hub on said shaft, said lower end of said shaft externally threaded with male threads and said cutter blade hub internally threaded with female threads, the male and female threads cooperating to secure said cutting blade hub tightly on said shaft.

19. An apparatus according to claim 17 wherein said at least one cutting blade further comprises an annular lower spherical bearing and an annular upper spherical bearing press fit into the at least one opening spaced outwardly from the central opening of said blade carrier to permit said shaft of said at least one cutting blade to rotate.

20. An apparatus according to claim 17 wherein said shaft of said at least one cutting blade has a radial bore formed therein adjacent said circumferential pocket of said blade carrier, said radial bore extending inwardly from said pocket and terminating in a longitudinally extending axial bore formed in said shaft and closed by a fluid-tight plug secured to the underside of said cutting blade hub.

21. An apparatus according to claim 20 wherein said cutting blade hub has a bore formed closed at one end by a fluid-tight setscrew, said bore extending outwardly from said axial bore of said shaft and terminating at an opening adjacent a gap between said cutting blade hub and the underside of said at least one cutting blade.

22. An apparatus according to claim 21 wherein the gap between said cutting blade hub and the underside of said at least one cutting blade is between about 0,635 cm and 2,54 cm (0,25 and 1,0 inches) wide.

23. An apparatus according to claim 21 wherein said bore of said cutting blade hub is rifled to impart a slight vortex to the treatment fluid exiting the bore.

24. An apparatus according to claim 4 wherein said pumping means comprises a variable capacity pump for pumping variable amounts of the treatment fluid through said fluid conduit means depending on the speed of said mower over the ground.

25. An apparatus according to claim 24 wherein said pumping means comprises a peristaltic pump which pumps the treatment fluid through said fluid conduit means via waves of contraction produced by a series of rollers which compress the fluid conduit means containing the treatment fluid.

26. An apparatus according to claim 4 wherein said fluid conduit means (190) comprises a flexible tube which extends outwardly from said fluid container means (130) and passes through said pumping means (150) to said cutting blade drive means (60), wherein
said cutting blade drive means comprises a housing and a drive shaft;
said at least one cutting blade comprises a shaft and a cutting blade hub; and
said fluid conduit means further comprises
a well, a radial bore and a circumferential pocket formed in said housing of said cutting blade drive means;
a first radial bore, an axial bore and a second radial bore formed in said drive shaft of said cutting blade drive means;
a first circumferential pocket, a fluid channel and a second circumferential pocket formed in said blade carrier;
a radial bore and an axial bore formed in said shaft of said at least one cutting blade;
and a bore formed in said cutting blade hub of said at least one cutting blade.

27. An apparatus according to claim. 26 wherein said fluid conduit means (190) terminates adjacent a gap opposite the underside of said at least one cutting blade.

28. An apparatus according to claim 3 wherein said mower is selected from the group consisting of a push lawnmower, a conventional power lawnmower, a riding lawnmower, an engine driven tractor, a bushog mower, a batwing mower, a harvester, a hydraulic feller buncher, a high speed saw head, a high speed shear head, a sickle bar, a multiple disk mower, a reel mower, a flail mower and a mower head attached to the end of a hinged boom arm.

29. An apparatus according to claim 4 wherein said mower is a bushhog mower attached to and pulled behind a tractor and said flow control means is coupled to the rear axle of the tractor.

30. An apparatus according to claim 1 wherein said hollow fluid delivery shaft, which serves as a pulsing sealed hollow shaft fluid delivery apparatus further comprises:
a hollow stationary shaft (408; 433);
said hollow stationary shaft (408; 433) having an outlet port in communication with said fluid container means;
an inner race (431) having an outlet port, said inner race in contact with and surrounding said hollow stationary shaft;
a seal (414) surrounding and in slidable contact with said inner ball bearings packed in said seal;
an outer race (432) surrounding the ball bearings;
a hollow rotating shaft in sliding contact with said outer race;
at least one hollow spoke in fluid communication with fluid within said hollow rotating shaft; and
a fitting in communication with said hollow spoke having a nipple for engagement with piping about said hollow spoke,
wherein said hollow spoke rotates stationary shaft and upon alignment with said outlet port additional liquid is pulsed through the system resulting in placement of fluid on the lower cutting edge of the blade.

31. An apparatus according to claim 30 further comprising a reel mower comprising;
a central axle configured as said hollow fluid delivery shaft serving as a pulsing sealed hollow shaft fluid delivery apparatus;
at least one blade support spoke fixed to said central axle;
at least one rotating blade fixed to said blade support spoke;
at least one tube communicating with said nipple and terminating and in communication with said rotating blade;
a stationary anvil spaced slightly blade; and
a roller spaced from said anvil;
wherein interaction of said rotating facilitates the cut of vegetation and treatment fluid to said rotating blade from said rotating blade and said anvil said tubing supplies.

32. An apparatus according to claim 30 further comprising a flail mower comprising:
a central axle configured as said hollow fluid delivery shaft (406; 429);
at least one rotating blade fixed to said central axle;
at least one fluid delivery bars communicating with said fitting and in communication with said rotating blade; and
a roller spaced from said rotating blade;
wherein said rotating blade facilitates the cut of vegetation and said fluid delivery bar supplies treatment fluid to said rotating blade,
further comprising:
a hollow stationary shaft (408; 433);

33. An apparatus according to claim 2 further wherein said hollow fluid delivery shaft (406; 429), which serves as a pulsing hollow shaft fluid delivery system, further comprises:
a hollow rotating shaft at said center;
said hollow rotating shaft having an outlet port;
an inner race having a port, said inner race in contact with and surrounding said rotating hollow shaft;
a seal surrounding and in slidable contact with said inner race; ball bearings packed in said seal;
an outer race surrounding the ball bearings;
a hollow stationary shaft in sliding contact with said outer race;
at least one hollow spoke in fluid communication with fluid within said hollow stationary shaft; and
a fitting in communication with said hollow spoke having a nipple for engagement with piping;
wherein said hollow rotating shaft rotates within said hollow stationary shaft and when the hollow spoke aligns with the outlet port from said hollow rotating shaft additional liquid is pulsed through the system, resulting in placement of fluid on the lower cutting edge of the blade.

34. An apparatus according to claim 33 further comprising a sickle bar mower comprising: a reciprocating bar; a series of blades mounted to said reciprocating bar;
a series of guards spaced from and of blades surrounding said series of blades; a manifold having a fluid delivery-series of guards; said fluid delivery tube having exit ports; and said fluid delivery tube communicating with said hollow fluid delivery shaft (406; 429) wherein fluid from said fluid treatment said tube delivers treatment fluid to a lower edge of said series of blades.

35. An apparatus according to claim 2 further comprising a reel mower comprising:
a central axle configured as said hollow fluid delivery shaft (406; 429);
at least one blade support spoke fixed to said central axle;
at least one rotating blade fixed to spoke;
a stationary anvil spaced slightly from said rotating blade having a machined groove journaling a fluid delivery tube;
said fluid delivery tube having continuous slot exit ports; and
a roller spaced from said anvil;
wherein interaction of said rotating blade and said anvil facilitates the cut of vegetation and said tubing supplies treatment fluid to said rotating blade.

36. A method of cutting vegetation and treating the cut vegetation with a treatment fluid at the time that the vegetation is cut, said method comprising the steps of
providing at least one cutting blade, a fluid container, flow control means, a ground speed detection means, a pumping means and a fluid conduit extending between the fluid container and the at least one cutting blade;
cutting the vegetation using the at least one cutting blade;
setting the flow control means to operatively have the pumping means pump an amount of treatment fluid dependent on the ground speed;
detecting the ground speed; and
delivering through a hollow fluid delivery shaft a stream of the treatment fluid to the underside of the at least one cutting blade so that the treatment fluid is available to the cut vegetation at the time that the vegetation is cut.

37. The method of claim 36 wherein the at least one cutting blade is rotatably mounted on a mower head attached to a hinged boom arm.

38. The method of claim 36 wherein the stream of treatment fluid that is continuously available to the cut vegetation at the time that the vegetation is cut is absorbed directly into the translocation stream of the cut vegetation.

39. The method of claim 36 wherein the treatment fluid is delivered to the underside of the at least one cutting blade and is applied directly to the remaining stems of the cut vegetation.

## Patentansprüche

1. Vorrichtung zum Schneiden von Vegetation und zum Behandeln der geschnittenen Vegetation mit einem Behandlungsfluid, wobei die Vorrichtung umfasst:
mindestens eine Schneidklinge (105);
eine Fluidbehältereinrichtung (130) zum Aufnehmen des Behandlungsfluids, wobei die Fluidbehältereinrichtung in Fluidverbindung mit der mindestens einen Schneidklinge steht; Fluidleitungseinrichtungen (190) zum Ausgeben des Behandlungsfluids in einen Strom von der Fluidbehältereinrichtung zur Unterseite der mindestens einen Schneidklinge, so dass das Behandlungsfluid für die geschnittene Vegetation zum Zeitpunkt des Schneidens der Vegetation verfügbar ist, wobei die Fluidleitungseinrichtung (190) einen Fluiddurchlass durch eine hohle Fluidausgabewelle (102; 406; 429) bildet; **gekennzeichnet durch** eine Durchflussregeleinrichtung (160), die in Verbindung mit einer Bodengeschwindigkeitserkennungseinrichtung (164) zum Erkennen der Bodengeschwindigkeit der Vorrichtung steht, wobei die Durchflussregeleinrichtung (160) mit einer Pumpeinrichtung (150) zum Pumpen des Behandlungsfluids von der Fluidbehältereinrichtung zur Unterseite der mindestens einen Schneidklinge verbunden ist.

2. Vorrichtung nach Anspruch 1, bei der die Durchflussregeleinrichtung (160) die Pumpeinrichtung steuert, um die Menge des durch die Fluidleitungseinrichtung an die mindestens eine Schneidklinge ausgegebenen Behandlungsfluids zu dosieren.

3. Vorrichtung nach Anspruch, ferner mit einem Mäher mit:
einem im Wesentlichen planaren Mähwerksgehäuse (50);
einer drehbar an dem Mähwerksgehäuse angebrachten Schneidklingenantriebseinrichtung (60); und
einem an der Schneidklingenantriebseinrichtung befestigten Klingenträger (92); und
wobei die mindestens eine Schneidklinge drehbar an dem Klingenträger angebracht ist.

4. Vorrichtung nach Anspruch 3, ferner mit einer Durchflussregeleinrichtung (160), die mit der Pumpeinrichtung verbunden ist, um die Menge des durch die Fluidleitungseinrichtung an die mindestens eine Schneidklinge ausgegebenen Behandlungsfluids zu dosieren.

5. Vorrichtung nach Anspruch 4, bei der die Vorrichtung ferner einen Leitungsfilter zwischen der Fluidbehältereinrichtung und der hohlen Fluidausgabewelle aufweist.

6. Vorrichtung nach Anspruch 1, bei der die Bodengeschwindigkeitserkennungseinrichtung (164) aufweist: einen becherförmigen Zahnkranzträger mit einem mehrere radiale Zähne aufweisenden Zahnkranz; und eine mechanische Sensoreinrichtung (170) zum Zusammengreifen mit den Zähnen des Zahnkranzes, wobei die Sensoreinrichtung mechanisch mit der Pumpeinrichtung verbunden ist.

7. Vorrichtung nach Anspruch 1, bei der die Bodengeschwindigkeitserkennungseinrichtung (164) aufweist:
einen becherförmigen Flanschträger (166) mit einem mehrere radiale Zähne aufweisenden Flansch; und
eine elektrische Sensoreinrichtung (170) zum Erfassen der Winkelgeschwindigkeit der Zähne des Flanschs, wobei die Sensoreinrichtung elektrisch mit der Pumpeinrichtung verbunden ist.

8. Vorrichtung nach Anspruch 4, bei welcher der Mäher mehrere Räder aufweist und eine separate Bodengeschwindigkeitserkennungseinrichtung (164) nahe jedem der Räder des Mähers angeordnet ist.

9. Vorrichtung nach Anspruch 4, bei der die Durchflussregeleinrichtung ferner eine Steuereinheit (162) umfasst, die zum Verarbeiten vorbestimmter Eingabedaten und eines von der Bodengeschwindigkeitserkennungseinrichtung erzeugten elektrischen Signals elektrisch mit der Bodengeschwindigkeitserkennungseinrichtung verbunden ist, um die aus der Fluidbehältereinrichtung an die mindestens eine Schneidklinge auszugebende Menge des Behandlungsfluids zu bestimmen.

10. Vorrichtung nach Anspruch 9, bei der die Steuereinheit (162) elektrische mit der Pumpeinrichtung (150) verbunden ist, und die Steuereinheit ein elektrisches Signal zum Steuern des Betriebs der Pumpeinrichtung erzeugt.

11. Vorrichtung nach Anspruch 9, bei der die Durchflussregeleinrichtung ferner einen Schrittantriebsmotor (186) aufweist, und wobei die Steuereinheit (162) elektrisch mit dem Schrittantriebsmotor verbunden ist und ein elektrisches Signal zum Steuern des Betriebs des Schrittantriebsmotors erzeugt.

12. Vorrichtung nach Anspruch 9, bei der die Steuereinheit einen Global-Positioning-Satellite(GPS)-Senderempfänger umfasst, um die Position des Mähers zu übertragen, wenn das Behandlungsfluid aus der Fluidbehältereinrichtung an die mindestens eine Schneidklinge ausgegeben wird.

13. Vorrichtung nach Anspruch 3, bei welcher der Klingenträger (92) eine mittige Öffnung zum Aufnehmen der Schneidklingenantriebseinrichtung und mindestens eine von der mittigen Öffnung nach außen hin beabstandete Öffnung aufweist, wobei der Klingenträger ferner einen darin ausgebildeten Kanal aufweist, der sich zwischen der mittigen Öffnung und der mindestens einen von der mittigen Öffnung nach außen hin beabstandeten Öffnung erstreckt.

14. Vorrichtung nach Anspruch 13, bei welcher der Klingenträger (92) eine langgestreckte Stange mit einer oberen Hälfte, welche an einer unteren Hälfte angebracht ist, aufweist, und bei welcher die mindestens eine von der mittigen Öffnung nach außen hin beabstandete Öffnung nahe dem gegenüberliegenden Ende der Stange angeordnet ist und die mindestens eine Schneidklinge aufnimmt.

15. Vorrichtung nach Anspruch 13, bei welcher der Klingenträger (92) eine Scheibe umfasst, und bei welcher die mindestens eine von der mittigen Öffnung nach außen hin beabstandete Öffnung nahe dem äußeren Rand der Scheibe angeordnet ist und die mindestens eine Schneidklinge aufnimmt.

16. Vorrichtung nach Anspruch 13, bei welcher der Kanal des Klingenträgers (92) in einer zweiten Umfangstasche, die an der mindestens einen von der mittigen Öffnung nach außen hin beabstandeten Öffnung ausgebildet ist, so dass der Klingenträger in Fluidverbindung mit der mindestens einen Schneidklinge steht.

17. Vorrichtung nach Anspruch 16, bei der die mindestens eine Schneidklinge eine drehbar in der mindestens einen von der mittigen Öffnung nach außen hin beabstandeten Öffnung aufgenommene Welle aufweist, so dass die mindestens eine Schneidklinge in bezug auf den Klingenträger drehbar ist.

18. Vorrichtung nach Anspruch 17, bei der die wenigstens eine Schneidklinge ferner eine Schneidklingennabe aufweist, und die Welle ein oberes und ein unteres Ende aufweist, wobei das obere Ende der Welle eine daran ausgebildete Sechskant-Kontermutter zum Entfernen und Austauschen der Schneidklingennabe auf der Welle aufweist, wobei das untere Ende der Welle auf der Außenseite mit einem Außengewinde und die Schneidklingennabe auf der Innenseite mit einem Innengewinde versehen ist, wobei das Außen- und das Innengewinde zusammenwirken, um die Schneidklingennabe sicher an der Welle zu befestigen.

19. Vorrichtung nach Anspruch 17, bei der die mindestens eine Schneidklinge ferner ein ringförmiges unteres sphärisches Lager und ein ringförmiges oberes sphärisches Lager aufweist, die in die mindestens eine von der mittigen Öffnung nach außen hin beabstandete Öffnung der Klingenträgers eingepresst sind, um das Drehen der Welle der mindestens einen Schneidklinge zu ermöglichen.

20. Vorrichtung nach Anspruch 17, bei der in der Welle der mindestens einen Schneidklinge nahe der Umfangstasche des Klingenträgers eine radiale Bohrung ausgebildet ist, wobei die radiale Bohrung sich von der Tasche einwärts erstreckt und in einer längsverlaufenden axialen Bohrung endet, die in der Welle ausgebildet ist und durch einen Stopfen geschlossen ist, der an der Unterseite der Schneidklingennabe befestigt ist.

21. Vorrichtung nach Anspruch 20, bei der die Schneidklingennabe mit einer darin ausgebildeten Bohrung versehen ist, welche an einem Ende durch eine fluiddichte Anschlagschraube geschlossen ist, wobei sich die Bohrung von der axialen Bohrung der Welle nach außen erstreckt und an einer Öffnung nahe einem Spalt zwischen der Schneidklingennabe und der Unterseite der mindestens einen Schneidklinge endet.

22. Vorrichtung nach Anspruch 21, bei welcher der Spalt zwischen der Schneidklingennabe und der Unterseite der mindestens einen Schneidklinge zwischen ungefähr 0,635 cm und 2,54 cm (0,25 und 1,0 Inch) breit ist.

23. Vorrichtung nach Anspruch 21, bei dem die Bohrung der Schneidklingennabe gezogen ist, um dem aus der Bohrung austretenden Behandlungsfluid einen leichten Drall zu vermitteln.

24. Vorrichtung nach Anspruch 4, bei der die Pumpeinrichtung eine Pumpe mit regelbarer Leistung zum Pumpen variabler Mengen des Behandlungsfluids durch die Fluidleitungseinrichtung aufweist, welche von der Bodengeschwindigkeit des Mähers abhängen.

25. Vorrichtung nach Anspruch 24, bei der die Pumpeinrichtung eine peristaltische Pumpe umfasst, welche das Behandlungsfluid mittels Kontraktionswellen durch die Fluidleitungseinrichtung pumpt, welche durch eine Reihe von Rollen erzeugt werden, welche die das Behandlungsfluid enthaltende Fluidleitungseinrichtung zusammendrücken.

26. Vorrichtung nach Anspruch 4, bei der die Fluidleitungseinrichtung (190) einen flexiblen Schlauch aufweist, der sich von der Fluidbehältereinrichtung (130) nach außen erstreckt und durch die Pumpeinrichtung (150) zu der Schneidklingenantriebseinrichtung (60) verläuft, wobei
die Schneidklingenantriebseinrichtung ein Gehäuse und eine Antriebswelle umfasst;
die mindestens eine Schneidklinge eine Welle und eine Schneidklingennabe aufweist; und
die Fluidleitungseinrichtung ferner umfasst:
einen Schacht, eine radiale Bohrung und eine Umfangstasche, die in dem Gehäuse der Schneidklingenantriebseinrichtung ausgebildet sind;
eine erste radiale Bohrung, eine axiale Bohrung und eine zweite radiale Bohrung, die in der Antriebswelle der Schneidklingenantriebseinrichtung ausgebildet sind;
eine erste Umfangstasche, ein Fluidkanal und eine zweite Umfangstasche, die in dem Klingenträger ausgebildet sind;
eine radiale Bohrung und eine axiale Bohrung, die in der Welle der mindestens einen Schneidklinge ausgebildet sind;
und eine in der Schneidklingennabe der mindestens einen Schneidklinge ausgebildete Bohrung.

27. Vorrichtung nach Anspruch 26, bei der die Fluidleitungseinrichtung (190) nahe einem Spalt gegenüber der Unterseite der mindestens einen Schneidklinge endet.

28. Vorrichtung nach Anspruch 3, bei welcher der Mäher aus der Gruppe gewählt ist, die durch Handrasenmäher, herkömmliche Motorrasenmäher, Aufsitzrasenmäher, motorbetriebene Traktoren, Mulchmäher, Flügelmäher, Harvester, hydraulische Feller-Buncher, Hochgeschwindigkeitssägeköpfe, Hochgeschwindigkeitsschälköpfe, Mähbalken, Mehrscheibenmäher, Spindelmäher, Schlegelmäher und am Ende von Gelenkauslegerarmen angebrachte Mähköpfe gebildet ist.

29. Vorrichtung nach Anspruch 4, bei welcher der Mäher ein Mulchmäher ist, der an einem Traktor angebracht und hinter diesem gezogen ist, und die Durchflussregeleinrichtung mit der Hinterachse des Traktors verbunden ist.

30. Vorrichtung nach Anspruch 1, bei der die hohle Fluidausgabewelle, die als pulsierende dichte Hohlwellen-Fluidausgabevorrichtung dient, ferner aufweist:
eine stationäre Hohlwelle (408; 433);
wobei die stationäre Hohlwelle (408; 433) eine in Verbindung mit der Fluidbehältereinrichtung stehende Auslassöffnung aufweist;
einen inneren Laufring (431) mit einer Auslassöffnung, wobei der innere Laufring die stationäre Hohlwelle berührt und umgibt;
eine Dichtung (414), welche die in die Dichtung gepackten inneren Kugellager umgibt und mit diesen in Gleitkontakt steht;
einen die Kugellager umgebenden äußeren Laufring (432);
eine in Gleitkontakt mit dem äußeren Laufring befindliche drehende Hohlwelle;
mindestens eine hohle Speiche, die in Fluidverbindung mit Fluid in der drehenden Hohlwelle steht; und
ein in Verbindung mit der hohlen Speiche stehendes Anschlussstück mit einem Nippel zum Zusammengreifen mit einer um die hohle Speiche herum vorgesehenen Rohrleitung,
wobei die hohle Speiche sich relativ zu der stationären Welle dreht und beim Fluchten mit der Auslassöffnung zusätzliches Fluid pulsartig durch das System geleitet wird, was zum Aufbringen von Fluid auf die untere Schneidkante der Klinge führt.

31. Vorrichtung nach Anspruch 30, ferner mit einem Spindelmäher, umfassend:
eine als die hohle Fluidausgabewelle ausgebildete Mittelachse, die als pulsierende dichte Hohlwellen-Fluidausgabevorrichtung dient;
mindestens eine an der Mittelachse befestigte Klingenstützspeiche;
mindestens eine an der Klingenstützspeiche befestigte drehende Klinge;
mindestens ein Schlauch, der mit dem Nippel verbunden ist und an der drehenden Klinge endet, mit welcher er verbunden ist;
eine geringfügig beabstandete Gegenklinge; und
eine von der Gegenklinge beabstandete Rolle;
wobei das Zusammenwirken der drehenden Klinge und der Gegenklinge das Schneiden von Vegetation und die Zufuhr des von dem Schlauch gelieferten Behandlungsfluids zu der drehenden Klinge erleichtert.

32. Vorrichtung nach Anspruch 30, ferner mit einem Schlegelmäher umfassend:
eine Mittelachse, die als die Hohlwellen-Fluidausgabevorrichtung (406; 429) ausgebildet ist;
mindestens eine an der Mittelachse befestigte drehende Klinge;
mindestens eine Fluidausgabestange, die mit dem Anschlussstück und der drehenden Klinge verbunden ist; und
eine von der drehenden Klinge beabstandete Rolle;
wobei die drehende Klinge das Schneiden von Vegetation erleichtert und die Fluidausgabestange der drehenden Klinge Behandlungsfluid zuführt,
ferner mit:
einer stationären Hohlwelle (408; 433).

33. Vorrichtung nach Anspruch 2, bei welcher die hohle Fluidausgabewelle (406; 429), welche als pulsierende dichte Hohlwellen-Fluidausgabevorrichtung dient, ferner aufweist:
eine drehende Hohlwelle in der Mitte;
wobei die drehende Hohlwelle eine Auslassöffnung aufweist;
einen inneren Laufring mit einer Öffnung, wobei der innere Laufring die drehende Hohlwelle berührt und umgibt;
eine den inneren Laufring umgebende und in Gleitkontakt mit diesem befindliche Dichtung;
in die Dichtung gepackte Kugellager;
einen die Kugellager umgebenden äußeren Laufring;
eine stationäre Hohlwelle in Gleitkontakt mit dem äußeren Laufring;
mindestens eine hohle Speiche, die in Fluidverbindung mit dem Fluid in der stationären Hohlwelle steht; und
ein in Verbindung mit der hohlen Speiche stehendes Anschlussstück mit einem Nippel zum Zusammengreifen mit einer Rohrleitung;
wobei die drehende Hohlwelle in der stationären Hohlwelle dreht, und, wenn die hohle Speiche mit der Auslassöffnung der drehenden Hohlwelle fluchtet, zusätzliches Fluid pulsartig durch das System geleitet wird, was zum Aufbringen von Fluid auf die untere Schneidkante der Klinge führt.

34. Vorrichtung nach Anspruch 33, ferner mit einem Balkenmäher mit: einem hin und her gehenden Balken; einer Reihe von an dem Balken angebrachten Klingen; einer Reihe von im Abstand von den Klingen angeordneten Klingenschutzeinrichtungen, welche die Reihe von Klingen umgeben; einem Verteiler mit einer Reihe von Fluidausgabe-Schutzeinrichtungen; wobei der Fluidausgabeschlauch Austrittsöffnungen aufweist; und wobei der Fluidausgabeschlauch mit der hohlen Fluidausgabewelle (406; 429) verbunden ist, wobei aus der Behandlungsfluidbehältereinrichtung kommendes Fluid über den Schlauch an eine Unterkante der Reihe von Klingen geliefert wird.

35. Vorrichtung nach Anspruch 2, ferner mit einem Spindelmäher umfassend:
eine als die pulsierende dichte Hohlwellen-Fluidausgabevorrichtung (406; 429) ausgebildete Mittelachse;
mindestens eine an der Mittelachse befestigte Klingenstützspeiche;
mindestens eine an der Speiche befestigte drehende Klinge;
eine von der drehenden Klinge geringfügig beabstandete stationäre Gegenklinge mit einer gefrästen Nut, in welcher ein Fluidausgabeschlauch gelagert ist;
wobei der Fluidausgabeschlauch durchgehende Auslassschlitzöffnungen aufweist; und
eine von der Gegenklinge beabstandete Rolle;
wobei das Zusammenwirken der drehenden Klinge und der Gegenklinge das Schneiden von Vegetation erleichtert und der Schlauch Behandlungsfluid an die drehende Klinge liefert.

36. Verfahren zum Schneiden von Vegetation und zum Behandeln der geschnittenen Vegetation mit einem Behandlungsfluid zum Zeitpunkt des Schneidens der Vegetation, wobei das Verfahren die folgenden Schritte aufweist:
Vorsehen mindestens einer Klinge, eines Fluidbehälters, einer Durchflussregeleinrichtung, einer Bodengeschwindigkeitserkennungseinrichtung, einer Pumpeinrichtung und einer sich zwischen dem Fluidbehälter und der mindestens einen Schneidklinge erstreckenden Fluidleitung;
Schneiden der Vegetation unter Verwendung der mindestens einen Schneidklinge;
Einstellen der Durchflussregeleinrichtung, so dass die Pumpeinrichtung betriebsmäßig eine Menge des Behandlungsfluids in Abhängigkeit von der Bodengeschwindigkeit pumpt;
Erkennen der Bodengeschwindigkeit; und
Ausgeben eines Behandlungsfluidstroms durch eine hohle Fluidausgabewelle an die Unterseite der mindestens einen Schneidklinge, so dass das Behandlungsfluid zum Zeitpunkt des Scheidens der Vegetation für die geschnittene Vegetation verfügbar ist.

37. Verfahren nach Anspruch 36, bei dem die mindestens eine Schneidklinge drehbar an einem Mähkopf befestigt ist, welcher an einem Gelenkauslegerarm angebracht ist.

38. Verfahren nach Anspruch 36, bei dem der Behandlungsfluidstrom, die zum Zeitpunkt des Schneidens der Vegetation für die geschnittene Vegetation kontinuierlich zur Verfügung steht, direkt in den Translokationsstrom der geschnittenen Vegetation absorbiert wird.

39. Verfahren nach Anspruch 36, bei dem das Behandlungsfluid an die Unterseite der mindestens einen Schneidklinge ausgegeben und direkt auf die verbleibenden Stängel der geschnittenen Vegetation aufgebracht wird.

## Revendications

1. Appareil pour couper de la végétation et traiter la végétation coupée avec un fluide de traitement, ledit appareil comprenant :
au moins une lame de coupe (105) ;
des moyens formant réservoir de fluide (130) destinés à contenir le fluide de traitement, lesdits moyens formant réservoir de fluide étant en communication de passage d'un fluide avec ladite au moins une lame de coupe ; des moyens formant conduit de fluide (190) destinés, à partir desdits moyens formant réservoir de fluide, à délivrer le fluide de traitement, en un jet, à la face inférieure de ladite au moins une lame de coupe, afin que le fluide de traitement soit mis à disposition de la végétation coupée, au moment même où la végétation est coupée, lesdits moyens formant conduit de fluide (190) définissant un passage pour le fluide à travers un arbre creux de distribution de fluide (102 ; 406 ; 429) ; **caractérisé par** des moyens de commande de débit (160) en communication avec des moyens de détection de vitesse au sol (164) destinés à détecter la vitesse au sol de l'appareil, lesdits moyens de commande de débit (160) étant alors en communication avec des moyens de pompage (150) destinés à pomper le fluide de traitement desdits moyens formant réservoir de fluide, pour l'amener jusqu'à la face inférieure de ladite au moins une lame de coupe.

2. Appareil selon la revendication 1, dans lequel les moyens de commande de débit (160) commandent lesdits moyens de pompage pour doser la quantité du fluide de traitement délivrée à ladite au moins une lame de coupe, au travers desdits moyens formant conduit de fluide.

3. Appareil selon la revendication 1, comprenant en outre une faucheuse qui comprend
un toit de faucheuse (50) plan dans son allure générale ;
des moyens d'entraînement de lame de coupe (60), montés à rotation sur ledit toit de faucheuse ; et
un porte-lame (92) fixé auxdits moyens d'entraînement de lame de coupe ; et
dans lequel ladite au moins une lame de coupe est montée à rotation sur ledit porte-lame.

4. Appareil selon la revendication 3, comprenant en outre des moyens de commande de débit (160) couplés auxdits moyens de pompage, pour doser la quantité du fluide de traitement délivrée à ladite au moins une lame de coupe, au travers desdits moyens formant conduit de fluide.

5. Appareil selon la revendication 4, ledit appareil comprenant en outre un filtre intégré, entre les moyens formant réservoir de fluide et l'arbre creux de distribution de fluide.

6. Appareil selon la revendication 1, dans lequel lesdits moyens de détection de vitesse au sol (164) comprennent un support de roue dentée, en forme de cuvette, comprenant une roue dentée ayant une multiplicité de dents radiales formées sur elle, et des moyens formant capteur mécanique (170) destinés à engrener avec les dents de ladite roue dentée, lesdits moyens formant capteur étant couplés mécaniquement auxdits moyens de pompage.

7. Appareil selon la revendication 1, dans lequel lesdits moyens de détection de vitesse au sol (164) comprennent
un support de collerette (166) en forme de cuvette, comprenant une collerette ayant une multiplicité de dents radiales formées sur elle ; et
des moyens formant capteur électrique (170) destinés à capter la vitesse angulaire des dents de ladite collerette, lesdits moyens formant capteur étant couplés électriquement auxdits moyens de pompage.

8. Appareil selon la revendication 4, dans lequel ladite faucheuse comprend plusieurs roues, et un moyen de détection de vitesse au sol (164) séparé est prévu dans une position adjacente à chacune desdites roues de ladite faucheuse.

9. Appareil selon la revendication 4, dans lequel lesdits moyens de commande de débit comprennent, en outre, une unité de commande (162) couplée électriquement auxdits moyens de détection de vitesse au sol, pour traiter des données d'entrée prédéterminées ainsi qu'un signal électrique produit par lesdits moyens de détection de vitesse au sol, afin de déterminer la quantité de fluide de traitement devant être délivrée à ladite au moins une lame de coupe, à partir desdits moyens formant réservoir de fluide.

10. Appareil selon la revendication 9, dans lequel ladite unité de commande (162) est couplée électriquement auxdits moyens de pompage (150), et ladite unité de commande produit un signal électrique pour la commande du fonctionnement desdits moyens de pompage.

11. Appareil selon la revendication 9, dans lequel lesdits moyens de commande de débit comprennent, en outre, un moteur d'entraînement pas à pas (180), et dans lequel ladite unité de commande (162) est couplée électriquement audit moteur d'entraînement pas à pas et produit un signal électrique pour la commande du fonctionnement dudit moteur d'entraînement pas à pas.

12. Appareil selon la revendication 9, dans lequel ladite unité de commande comprend un émetteur-récepteur à GPS (Global Positioning Satellite) destiné à transmettre la position de ladite faucheuse lorsque le fluide de traitement est délivré à ladite au moins une lame de coupe, à partir desdits moyens formant réservoir de fluide.

13. Appareil selon la revendication 3, dans lequel ledit porte-lame (92) possède une ouverture centrale, pour recevoir lesdits moyens d'entraînement de lame de coupe, et au moins une ouverture espacée, vers l'extérieur, de l'ouverture centrale, ledit porte-lame présentant, en outre, un canal formé à l'intérieur, qui s'étend entre l'ouverture centrale et la au moins une ouverture espacée, vers l'extérieur, de l'ouverture centrale.

14. Appareil selon la revendication 13, dans lequel ledit porte-lame (92) comprend une barre allongée, comprenant une moitié supérieure fixée à une moitié inférieure, et dans lequel ladite au moins une ouverture espacée, vers l'extérieur, de l'ouverture centrale, est située au voisinage immédiat d'une extrémité, en vis-à-vis, de ladite barre et reçoit en elle ladite au moins une lame de coupe.

15. Appareil selon la revendication 13, dans lequel ledit porte-lame (92) comprend un disque et dans lequel la au moins une ouverture espacée, vers l'extérieur, de l'ouverture centrale, est située au voisinage immédiat du bord extérieur dudit disque et reçoit en elle ladite au moins une lame de coupe.

16. Appareil selon la revendication 13, dans lequel ledit canal dudit porte-lame (92) se termine dans une seconde poche circonférentielle, formée sur la au moins une ouverture espacée, vers l'extérieur, de l'ouverture centrale, afin que ledit porte-lame soit en communication de passage d'un fluide avec ladite au moins une lame de coupe.

17. Appareil selon la revendication 16, dans lequel ladite au moins une lame de coupe comprend un arbre reçu en rotation dans la au moins une ouverture espacée, vers l'extérieur, de l'ouverture centrale, afin que ladite au moins une lame de coupe puisse tourner par rapport audit porte-lame.

18. Appareil selon la revendication 17, dans lequel ladite au moins une lame de coupe comprend, en outre, un moyeu de lame de coupe et ledit arbre comprend une extrémité supérieure et une extrémité inférieure, ladite extrémité supérieure dudit arbre ayant un contre-écrou à tête hexagonale, formé sur elle, en vue du démontage et du remplacement dudit moyeu de lame de coupe sur ledit arbre, ladite extrémité inférieure dudit arbre étant filetée extérieurement, en étant dotée d'un filetage mâle, et ledit moyeu de lame de coupe étant fileté intérieurement, en étant doté d'un filetage femelle, les filetages mâle et femelle coopérant entre eux pour fixer fermement ledit moyeu de lame de coupe sur ledit arbre.

19. Appareil selon la revendication 17, dans lequel ladite au moins une lame de coupe comprend, en outre, un palier sphérique inférieur annulaire et un palier sphérique supérieur annulaire, montés par ajustement serré dans la au moins une ouverture espacée, vers l'extérieur, de l'ouverture centrale dudit porte-lame, pour permettre audit arbre de ladite au moins une lame de coupe de tourner.

20. Appareil selon la revendication 17, dans lequel ledit arbre de ladite au moins une lame de coupe a une forure radiale formée en lui, au voisinage immédiat de ladite poche circonférentielle dudit porte-lame, ladite forure radiale s'étendant vers l'intérieur à partir de ladite poche et se terminant dans une forure axiale s'étendant longitudinalement, formée dans ledit arbre et fermée par un bouchon étanche aux fluides fixé à la face inférieure dudit moyeu de lame de coupe.

21. Appareil selon la revendication 20, dans lequel ledit moyeu de lame de coupe a une forure formée en lui, qui est fermée à une extrémité par une vis sans tête étanche aux fluides, ladite forure s'étendant vers l'extérieur à partir de ladite forure axiale dudit arbre et se terminant au niveau d'une ouverture adjacente à un vide entre ledit moyeu de lame de coupe et la face inférieure de ladite au moins une lame de coupe.

22. Appareil selon la revendication 21, dans lequel le vide entre ledit moyeu de lame de coupe et la face inférieure de ladite au moins une lame de coupe est d'une largeur comprise entre environ 0,635 cm et 2,54 cm (0,25 et 1,0 pouce).

23. Appareil selon la revendication 21, dans lequel ladite forure dudit moyeu de lame de coupe est rayée pour communiquer un léger mouvement tourbillonnaire au fluide de traitement quittant la forure.

24. Appareil selon la revendication 4, dans lequel lesdits moyens de pompage comprennent une pompe à capacité variable pour pomper des quantités variables du fluide de traitement à travers lesdits moyens formant conduit de fluide, en fonction de la vitesse de ladite faucheuse sur le sol.

25. Appareil selon la revendication 24, dans lequel lesdits moyens de pompage comprennent une pompe péristaltique, qui pompe le fluide de traitement à travers lesdits moyens formant conduit de fluide, par le biais d'ondes de contraction produites par une série de galets qui compriment les moyens formant conduit de fluide, contenant le fluide de traitement.

26. Appareil selon la revendication 4, dans lequel lesdits moyens formant conduit de fluide (190) comprennent un tube flexible qui s'étend vers l'extérieur, à partir desdits moyens formant réservoir de fluide (130), et passe à travers lesdits moyens de pompage (150), jusqu'auxdits moyens d'entraînement de lame de coupe (60), dans lequel
lesdits moyens d'entraînement de lame de coupe comprennent un carter et un arbre d'entraînement ;
ladite au moins une lame de coupe comprend un arbre et un moyeu de lame de coupe ; et
lesdits moyens formant conduit de fluide comprennent en outre
un puits, une forure radiale et une poche circonférentielle, formés dans ledit carter desdits moyens d'entraînement de lame de coupe ;
une première forure radiale, une forure axiale et une deuxième forure radiale, formées dans ledit arbre d'entraînement desdits moyens d'entraînement de lame de coupe ;
une première poche circonférentielle, un canal à fluide et une deuxième poche circonférentielle, formés dans ledit porte-lame ;
une forure radiale et une forure axiale formées dans ledit arbre de ladite au moins une lame de coupe ;
et une forure formée dans ledit moyeu de lame de coupe de ladite au moins une lame de coupe.

27. Appareil selon la revendication 26, dans lequel lesdits moyens formant conduit de fluide (190) se terminent au voisinage immédiat d'un vide en vis-à-vis de la face inférieure de ladite au moins une lame de coupe.

28. Appareil selon la revendication 3, dans lequel ladite faucheuse est choisie dans le groupe comprenant une tondeuse à gazon poussée, une tondeuse à gazon électrique traditionnelle, une tondeuse à gazon autotractée, un tracteur motorisé, une faucheuse-débroussailleuse, une faucheuse à ailes de chauve-souris, une moissonneuse, une abatteuse-ramasseuse hydraulique, une tête de sciage ultrarapide, une tête de cisaillage ultra-rapide, une barre de fauchage, une faucheuse à disques multiples, une faucheuse à lames rotatives et contrelame, une faucheuse à fléaux et une tête de faucheuse fixée à l'extrémité d'un bras articulé de mât.

29. Appareil selon la revendication 4, dans lequel ladite faucheuse est une faucheuse-débroussailleuse attelée à et tirée derrière un tracteur, et lesdits moyens de commande de débit sont couplés à l'essieu arrière du tracteur.

30. Appareil selon la revendication 1, dans lequel ledit arbre creux de distribution de fluide, qui fait office de dispositif de distribution pulsée de fluide à arbre creux étanchéifié, comprend en outre :
un arbre creux fixe (408 ; 433) ;
ledit arbre creux fixe (408 ; 433) présentant un orifice de sortie
placé en communication avec lesdits moyens formant réservoir de fluide ;
une bague de roulement intérieure (431) présentant un orifice de sortie, ladite bague de roulement intérieure étant en contact avec et entourant ledit arbre creux fixe ;
une étanchéité (414) entourant et placée en contact glissant avec ladite bague de roulement intérieure ; des roulements à billes calés dans ladite étanchéité ;
une bague de roulement extérieure (432) entourant les roulements à billes ;
un arbre creux rotatif en contact glissant avec ladite bague de roulement extérieure ;
au moins un rayon creux en communication avec le fluide à l'intérieur dudit arbre creux rotatif ; et
un raccord communiquant avec ledit rayon creux et comportant un embout de raccordement destiné à venir en prise avec un tuyau autour dudit rayon creux,
dans lequel ledit rayon creux tourne autour de l'arbre fixe et, lorsqu'il est aligné avec ledit orifice de sortie, un supplément de liquide est pulsé à travers le système, ce qui conduit à mettre du fluide sur l'arête de coupe inférieure de la lame.

31. Appareil selon la revendication 30, comprenant en outre une faucheuse à lames rotatives et contrelame, qui comprend :
un axe central configuré sous forme dudit arbre creux de distribution de fluide faisant office de dispositif de distribution pulsée de fluide à arbre creux étanchéifié ;
au moins un rayon de support de lame, fixé audit axe central ;
au moins une lame rotative, fixée audit rayon de support de lame ;
au moins un tube communiquant avec ledit embout de raccordement et se terminant au niveau de ladite lame rotative, avec laquelle il est placé en communication ;
une contrelame fixe, légèrement espacée de ladite lame rotative ; et une roulette espacée de ladite contrelame ;
dans lequel l'interaction de ladite lame rotative et de ladite contrelame facilite la coupe de la végétation, et ledit tube fournit du fluide de traitement à ladite lame rotative depuis ledit axe central.

32. Appareil selon la revendication 30, comprenant en outre une faucheuse à fléaux, qui comprend :
un axe central configuré sous forme dudit arbre creux de distribution de fluide (406 ; 429) ;
au moins une lame rotative, fixée audit axe central ;
au moins une barre de distribution de fluide communiquant avec ledit raccord et placée en communication avec ladite lame rotative ; et
une roulette espacée de ladite lame rotative ;
dans lequel ladite lame rotative facilite la coupe de la végétation et ladite barre de distribution de fluide fournit du fluide de traitement à ladite lame rotative,
comprenant en outre :
un arbre creux fixe (408 ; 433).

33. Appareil selon la revendication 2, dans lequel, en outre, ledit arbre creux de distribution de fluide (406 ; 429), qui fait office de système de distribution pulsée de fluide à arbre creux, comprend en outre :
un arbre creux rotatif audit centre ;
ledit arbre creux rotatif présentant un orifice de sortie ;
une bague de roulement intérieure présentant un orifice, ladite bague de roulement intérieure étant en contact avec et entourant ledit arbre creux rotatif ;
une étanchéité entourant et placée en contact glissant avec ladite bague de roulement intérieure ; des roulements à billes calés dans ladite étanchéité ;
une bague de roulement extérieure entourant les roulements à billes ;
un arbre creux fixe en contact glissant avec ladite bague de roulement extérieure ;
au moins un rayon creux en communication avec le fluide à l'intérieur dudit arbre creux fixe ; et
un raccord communiquant avec ledit rayon creux et comportant un embout de raccordement destiné à venir en prise avec un tuyau ;
dans lequel ledit arbre creux rotatif tourne à l'intérieur dudit arbre creux fixe et, lorsque le rayon creux est aligné avec l'orifice de sortie dudit arbre creux rotatif, un supplément de liquide est pulsé à travers le système, ce qui conduit à mettre du fluide sur l'arête de coupe inférieure de la lame.

34. Appareil selon la revendication 33, comprenant en outre une faucheuse à barre de fauchage, qui comprend : une barre à mouvement de va-et-vient ; une série de lames montée sur ladite barre à mouvement de va-et-vient ;
une série d'éléments protecteurs espacés des lames, entourant ladite série de lames ; un collecteur comportant une série, distributrice de fluide, d'éléments protecteurs ; ledit tube de distribution de fluide présentant des orifices d'échappement ; et ledit tube de distribution de fluide communiquant avec ledit arbre creux de distribution de fluide (406 ; 429),
dans lequel ledit tube délivre du fluide de traitement à une arête inférieure de ladite série de lames.

35. Appareil selon la revendication 2, comprenant en outre une faucheuse à lames rotatives et contrelame, qui comprend :
un axe central configuré sous forme dudit arbre creux de distribution de fluide (406 ; 429) ;
au moins un rayon de support de lame, fixé audit axe central ;
au moins une lame rotative, fixée au rayon ;
une contrelame fixe, légèrement espacée de ladite lame rotative et
présentant une rainure usinée dans laquelle est reçu un tube de distribution de fluide;
ledit tube de distribution de fluide présentant des orifices d'échappement en forme de fente continue ; et
une roulette espacée de ladite contrelame ;
dans lequel l'interaction de ladite lame rotative et de ladite contrelame facilite la coupe de la végétation, et ledit tube fournit du fluide de traitement à ladite lame rotative.

36. Procédé pour couper de la végétation et traiter la végétation coupée avec un fluide de traitement au moment même où la végétation est coupée, ledit procédé comprenant les étapes consistant à
prévoir au moins une lame de coupe, un réservoir de fluide, des moyens de commande de débit, des moyens de détection de vitesse au sol, des moyens de pompage et un conduit de fluide s'étendant entre le réservoir de fluide et la au moins une lame de coupe ;
couper la végétation à l'aide de la au moins une lame de coupe ;
régler les moyens de commande de débit pour faire activement pomper, par les moyens de pompage, une quantité de fluide de traitement dépendant de la vitesse au sol ;
détecter la vitesse au sol ; et
délivrer, à travers un arbre creux de distribution de fluide, un jet du fluide de traitement à la face inférieure de la au moins une lame de coupe, afin que le fluide de traitement soit à la disposition de la végétation coupée au moment même où la végétation est coupée.

37. Procédé selon la revendication 36, dans lequel la au moins une lame de coupe est montée à rotation sur une tête de faucheuse fixée à un bras articulé de mât.

38. Procédé selon la revendication 36, dans lequel le jet de fluide de traitement, qui est continuellement à la disposition de la végétation coupée au moment où la végétation est coupée, est absorbé directement dans le flux de transfert de la végétation coupée.

39. Procédé selon la revendication 36, dans lequel le fluide de traitement est délivré à la face inférieure de la au moins une lame de coupe et est appliqué directement sur les tiges résiduelles de la végétation coupée.
